# EUROPÄISCHE PATENTSCHRIFT

(11) **EP 3 408 913 B1**
(45) Veröffentlichungstag und Bekanntmachung des Hinweises auf die Patenterteilung: **29.07.2020**
(21) Anmeldenummer: 17702352.0
(22) Anmeldetag: 27.01.2017
(51) Int. Cl.: H02J 3/38

(54) **VERFAHREN ZUM EINSPEISEN ELEKTRISCHER LEISTUNG IN EIN ELEKTRISCHES VERSORGUNGSNETZ**
METHOD FOR FEEDING ELECTRICAL POWER INTO AN ELECTRIC SUPPLY NETWORK
PROCÉDÉ D'INJECTION D'ÉNERGIE ÉLECTRIQUE DANS UN RÉSEAU D'ALIMENTATION ÉLECTRIQUE

(30) Priorität: 27.01.2016 DE 102016101468
(43) Veröffentlichungstag der Anmeldung: 05.12.2018
(73) Patentinhaber: Wobben Properties GmbH, 26607 Aurich (DE)
(72) Erfinder: BROMBACH, Johannes, 13437 Berlin (DE)
(74) Vertreter: Eisenführ Speiser
(86) Internationale Anmeldenummer: PCT/EP2017/051777
(87) Internationale Veröffentlichungsnummer: WO 2017/129749

(56) Entgegenhaltungen:
- WO-A1-2014/012789
- DE-A1- 3 632 178
- DE-A1-102007 049 251
- DE-A1-102011 084 910
- DE-A1-102013 208 474

## Beschreibung

Die vorliegende Erfindung betrifft ein Verfahren zum Einspeisen elektrischer Leistung in ein elektrisches Versorgungsnetz. Außerdem betrifft die vorliegende Erfindung eine Windenergieanlage zum Durchführen eines solchen Verfahrens und die Erfindung betrifft auch einen mehrere Windenergieanlagen aufweisenden Windpark zum Durchführen eines solchen Verfahrens, bzw. ein Kraftwerk oder eine Erzeugungseinheit mit mindestens einer Windenergieanlage und einer Kombination mit Speichern, steuerbaren Verbrauchern und/oder anderen regenerativen Erzeugern . Die Erfindung betrifft auch eine Anordnung mehrere Windenergieanlagen oder mehrerer Windparks zum Einspeisen an mehreren Netzanschlusspunkten.

Es ist bekannt, mit Windenergieanlagen elektrische Leistung in ein elektrisches Versorgungsnetz, wie beispielsweise in das europäische Verbundnetz, einzuspeisen. Zum Einspeisen verwenden solche Windenergieanlagen üblicherweise Frequenzwechselrichter, mit denen direkt oder indirekt der elektrische Strom mit der gewünschten Frequenz und Phase in das elektrische Versorgungsnetz eingespeist wird. Diese Art der Einspeisung weicht somit wesentlich von der Art der Einspeisung herkömmlicher Großkraftwerke ab, die zum Einspeisen einen direkt mit dem elektrischen Versorgungsnetz gekoppelten Synchrongenerator verwenden. Solche direkt mit dem Netz gekoppelte Synchrongeneratoren sollen eine stabilisierende Wirkung auf das elektrische Versorgungsnetz haben, das vereinfachend auch nur als Netz bezeichnet werden kann.

Durch zunehmenden Anteil von regenerativen Energiequellen im Netz, besonders Windenergieanlagen, wird somit eine Abnahme dieser stabilisierenden Wirkung durch Synchrongeneratoren im Netz befürchtet.

Um das elektrische Versorgungsnetz auch mit Hilfe von Windenergieanlagen zu stabilisieren, sind bereits Verfahren bekannt, bei denen beispielsweise in Abhängigkeit der Netzfrequenz oder der Netzspannung die eingespeiste Leistung verändert wird. Als Beispiel für eine solche frequenzabhängige Leistungsregelung wird auf das Dokument US-2003-0155773-A1 verwiesen und für eine Spannungsabhängige Leistungsregelung wird auf das Dokument WO99/33165 verwiesen. Besonders für die Stützung des elektrischen Versorgungsnetzes mittels Windparks wird auch vorgeschlagen, dass ein solcher Windpark seine eingespeiste Leistung in Abhängigkeit externer Signale verändert, die besonders durch den Netzbetreiber eingegeben werden können. Dazu wird beispielhaft verwiesen auf die Offenlegungsschrift US-2006-0142899-A1. Einiges dieser Vorschläge ist teilweise auch schon in Netzanschlussregeln aufgenommen worden.

Möglicherweise sind solche Lösungen aber nicht weitreichend genug, besonders dann, wenn die noch immer im elektrischen Versorgungsnetz vorhandenen Großkraftwerke mit direkt gekoppelten Synchrongeneartoren in ihrer Dominanz zurückgehen, oder im extremsten Falle sogar gänzlich verschwinden.

Hierfür wurden bereits Lösungen vorgeschlagen, das Verhalten eines Synchrongenerators zu emulieren. Das europäische Patent EP 1 790 850 B1 schlägt dazu vor, einen internen Referenzrahmen zu verwenden, der als Integrator implementiert ist und eine virtuelle Trägheit emuliert, um ein variables Referenzfrequenzsignal bereitzustellen.

Aber auch bei solchen Lösungen können Stabilitätsprobleme im Netz bestehen bleiben, größer werden oder neu hinzukommen. Zunächst ist zu beachten, dass auch eine Stabilisierung des Netzes durch Synchrongeneratoren nicht durchweg ideal funktioniert. Die große Trägheit der Synchrongeneratoren schafft zwar einerseits eine vergleichmäßigende und dadurch zumindest teilweise stabilisierende Wirkung, kann aber auch einer schnellen Regelung im Wege stehen. Es sind beispielsweise Netzpendelungen bekannt, bei denen solche Synchrongeneratoren mehrerer Großkraftwerke gegeneinander schwingen können. Es ist auch zu beachten, dass eine vollständige Emulation eines Großkraftwerkes nicht nur das grundsätzliche Verhalten eines Synchrongenerators emulieren müsste, sondern auch dessen Größe, die insbesondere durch die jeweilige Nennleistung angegeben werden kann. Derzeit werden viele Windenergieanlagen benötigt, um auf die Nennleistung eines Großkraftwerkes zu kommen. Selbst Windparks mit mehreren Windenergieanlagen weisen regelmäßig eine deutlich geringere Leistung auf als ein Großkraftwerk. Somit bleibt wenigstens auch der Unterschied bestehen, dass Windenergieanlagen gegenüber Großkraftwerken sehr viel stärker dezentral einspeisen.

Das Deutsche Patent- und Markenamt hat in der Prioritätsanmeldung zu vorliegender Anmeldung folgenden Stand der Technik recherchiert: DE 10 2006 050 077 A1, US 2003 /0 155 773 A1, US 2006 / 0 142 899 A1, US 2011 / 0 130 889 A1, US 2014 / 0 316 592 A1, EP 1 790 850 B1, WO 99 / 33 165 A1, KARIMI-GHARTEMANI, M.; REZA IRAVANI, M.: A Signal processing module for power system applications. In: IEEE Transactions on Power Delivery, vol. 18, no. 4, pp. 1118-1126, Oct. 2003. In: IEEE Xplore [online], DOI: 10.1109/TPWRD.2003.817514, In: IEEE.

Die internationale Recherchenbehörde hat zur vorliegenden Anmeldung den folgenden Stand der Technik recherchiert: DE 10 2007 049251 A1, WO 2014/012789 A1, DE 10 2013 208474 A1. Das Dokument DE 10 2007 049251 A1 betrifft ein Verfahren zum Einspeisen elektrischen Stroms in ein elektrisches Netz. Das Dokument WO 2014/012789 A1 betrifft ein Verfahren zum Steuern eines mehrere Windenergieanlagen umfassenden Windparks. Das Dokument DE 10 2013 208474 A1 betrifft ein Verfahren zum Einspeisen elektrischer Leistung in ein elektrisches Versorgungsnetz.

Der vorliegenden Erfindung liegt somit die Aufgabe zugrunde, zumindest eines der oben genannten Probleme zu adressieren. Insbesondere soll eine Lösung vorgeschlagen werden, die bekannte Verfahren der Netzstützung verbessert, zumindest einen weiteren Beitrag zur Netzstützung liefert. Zumindest soll eine alternative Lösung vorgeschlagen werden.

Erfindungsgemäß wird somit ein Verfahren zum Einspeisen elektrischer Leistung in ein elektrisches Versorgungsnetz gemäß Anspruch 1 vorgeschlagen. Die Einspeisung erfolgt hierbei an einem Netzanschlusspunkt, und das elektrische Versorgungsnetz weist eine Netzspannung und eine Netzfrequenz auf. Sowohl die Netzspannung als auch die Netzfrequenz bilden jeweils einen Zustand des elektrischen Versorgungsnetzes. Die Einspeisung erfolgt mittels einer Windenergieanlage und weist die folgenden Schritte auf.

Es wird ein Referenzsystem vorgegeben, dass eine Referenzfrequenz, einen Referenzzeiger mit einem Referenzwinkel und eine Referenzamplitude einer zu erzeugenden Ausgangsspannung aufweist. Dieses Referenzsystem gibt somit eine Orientierung für die zu erzeugende Ausgangsspannung, die insbesondere am Ausgang eines Wechselrichters der Windenergieanlage erzeugt wird. Im einfachsten Fall entspricht die Referenzfrequenz, der Referenzwinkel und die Referenzamplitude der Frequenz, dem Winkel und der Amplitude der zu erzeugenden Ausgangsspannung. Der Referenzzeiger ist somit ein Spannungszeiger der Ausgangsspannung. Zwischen der Referenzamplitude und der Amplitude der Ausgangsspannung kann ein Zusammenhang über einen konstanten Faktor, besonders auch einen Normierungsfaktor, bestehen. Die Referenzfrequenz sollte möglichst der Frequenz der Ausgangsspannung entsprechen, wobei durch dynamische bzw. transiente Prozesse Abweichungen auftreten können.

Mit anderen Worten kann das Referenzsystem so beschrieben werden, dass es einen Referenzzeiger mit einem Referenzwinkel und einer Referenzamplitude aufweist und dieser Referenzzeiger mit der Referenzfrequenz umläuft. Entsprechend ändert sich der Referenzwinkel mit der Referenzfrequenz. Daran orientiert sich die Ausgangsspannung, die im einfachsten Fall damit identisch ist. Ebenso kann auch die Netzspannung durch einen umlaufenden Spannungszeiger definiert werden, der mit der Netzfrequenz umläuft. Wenn die erzeugte Ausgangsspannung dem Referenzsystem entspricht, also ebenfalls durch den Referenzzeiger beschrieben werden kann, ist der Phasenwinkel der Winkel zwischen dem Referenzzeiger und dem Spannungszeiger der Netzspannung. Somit kann u.a. der Phasenwinkel und darauf basierend der Arbeitspunkt eingestellt werden.

Die Referenzfrequenz sollte im Wesentlichen der Netzfrequenz entsprechen. Im idealen stationären Zustand, wenn sich also die Netzfrequenz nicht ändert, sollte die Referenzfrequenz mit der Netzfrequenz übereinstimmen. Bei dynamischen und transienten Vorgängen können sich aber Abweichungen einstellen, was nachfolgend auch noch erläutert werden wird.

Ändert sich nun die Netzfrequenz, kann der Spannungszeiger der Netzspannung driften und sich somit kontinuierlich vom Spannungszeiger der Ausgangsspannung entfernen oder sich ihm nähern, wodurch sich der Phasenwinkel erhöhen bzw. verringern kann. Dem kann der Referenzzeiger diesem Spannungszeiger der Netzspannung verzögert nachgeführt werden.

Der Spannungszeiger der Netzspannung kann sich aber auch in seiner Amplitude vergrößern oder verringern. Das entspricht dann einer Erhöhung oder Verringerung der Spannungsamplitude. Auch dem kann das Referenzsystem, besonders mit dem Referenzzeiger, nachgeführt werden.

Als weitere Möglichkeit der Veränderung des Spannungszeigers der Netzspannung kommt in Betracht, dass dieser sich auch in seinem Winkel sprunghaft ändert. Das kann dann passieren, wenn beispielsweise eine große Last, also ein großer Verbraucher, vom elektrischen Versorgungsnetz getrennt wird. Dadurch kann sich die für einen Strompfad wirksame Gesamtimpedanz, die sich aus der Impedanz der einspeisenden Einheit, der Netzimpedanz und der Impedanz des Verbrauchers zusammensetzt, auch in ihrem Winkel ändern, sodass sich auch die Spannung entsprechend in ihrem Winkel ändern kann. Der Spannungszeiger der Netzspannung springt dann entsprechend besonders auch in seinem Winkel.

Auch diesem sich sprunghaft ändernden Spannungszeiger der Netzspannung kann der Referenzzeiger nachgeführt werden.

Weiterhin wird ein mit dem Referenzwinkel umlaufender Einspeisewinkel aus dem vorgegebenen Phasenwinkel berechnet, sodass sich zwischen der mit einem solchen Einspeisewinkel erzeugten Ausgangsspannung und der Netzspannung der vorgegebene Phasenwinkel ergibt, wenn die Referenzfrequenz mit der Netzfrequenz übereinstimmt. Das Verfahren arbeitet also so, dass eine Ausgangsspannung mit einem Spannungszeiger mit dem Einspeisewinkel erzeugt wird. Es stellt sich dann der Phasenwinkel zwischen dem Spannungszeiger der Ausgangsspannung und dem Spannungszeiger der Netzspannung ein. In einem einfachen Fall wird das Referenzsystem so gewählt, dass der Einspeisewinkel dem Referenzwinkel entspricht. Der Spannungszeiger der Ausgangsspannung entspricht dann dem Referenzzeiger, zumindest in seinem Winkel.

Es wird dann die Ausgangsspannung entsprechend erzeugt, nämlich mit einer Spannungsamplitude in Abhängigkeit der Referenzamplitude, einer Frequenz in Abhängigkeit der Referenzfrequenz und mit dem Einspeisewinkel. Im einfachsten Fall entspricht die Spannungsamplitude der Ausgangsspannung der Referenzamplitude, und es entspricht die Frequenz der Ausgangsspannung der Referenzfrequenz, und der Einspeisewinkel entspricht dem Referenzwinkel. Das kann besonders für den stationären Zustand gelten. Als stationärer Zustand wird hier insoweit zumindest einer verstanden, bei dem die Spannungsamplitude, die Frequenz und der Phasenwinkel konstant sind.

Ändert sich nun das Verhalten der Netzspannung, insbesondere die Netzfrequenz oder beispielsweise auch die Netzspannung, so wird das Referenzsystem diesem Verhalten nachgeführt. Im Beispiel der Frequenz bedeutet das, dass versucht wird, dass die Referenzfrequenz wieder der Netzfrequenz entspricht. Im Beispiel der Spannungsamplitude, also dem Nachführen der Referenzamplitude, kann das beispielsweise auch bedeuten, dass die Referenzamplitude der Spannungsamplitude der Netzspannung nicht exakt entspricht, aber beispielsweise in ein vorbestimmtes Verhältnis gebracht wird. Beispielsweise kann die Referenzamplitude um 10 % über der Spannungsamplitude der Netzspannung liegen. Verringert sich nun beispielsweise die Spannungsamplitude der Netzspannung, so kann die Referenzamplitude so nachgeführt werden, dass sie wieder um 10% über der Spannungsamplitude der Netzfrequenz liegt, um bei diesem anschaulichen Beispiel zu bleiben.

Dieses Nachführen des Referenzsystems erfolgt aber verzögert. Es wird somit nicht versucht, das Referenzsystem so schnell und so gut wie möglich dem Verhalten der Netzspannung nachzuführen, sondern es wird hier bewusst der Netzspannung nicht sofort und unmittelbar gefolgt. Es wird hier also eine verzögerte Nachführung vorgesehen, die hinsichtlich ihrer Verzögerung deutlich über eine physikalisch notwendige Dynamik hinausgeht.

Durch dieses nur verzögerte Nachführen des Referenzsystems kann somit erreicht werden, dass eine Veränderung der Netzspannung bei unveränderter Ausgangsspannung zu einer entsprechenden Reaktion besonders des eingespeisten Stroms führt. Durch die Verzögerung wird diese Reaktion somit nicht unterbunden, sondern dadurch bewusst gefördert.

Stellt sich also beispielsweise eine geringere Netzspannung ein, kann es zu einem erhöhten Stromfluss, also einem erhöhten Einspeisestrom, führen. Entsprechend kann es auch zu einer erhöhten eingespeisten Leistung führen. Das Verfahren schlägt vor, eine solche sich einstellende Leistungserhöhung oder Stromerhöhung zuzulassen. Die Einspeisung kann dabei auf Basis des Referenzsystems zunächst unverändert fortgesetzt werden.

Stellt sich ein höherer Leistungsfluss ein, kann die dafür benötigte Leistung aus Zwischenspeichern, wie beispielsweise einem Batteriespeicher, oder aus der Schwungmasse des rotierenden Rotors der Windenergieanlage genommen werden. Gleiches gilt für eine Leistungsverringerung sinngemäß. Auch diese wird zunächst zugelassen, und die geringere Leistungsabnahme kann durch Zwischenspeichern der entsprechenden Leistung in Zwischenspeichern wie beispielsweise Batteriespeichern erfolgen, es kann die Leistungsproduktion der Windenergieanlage verringert werden, besonders durch Pitchen der Rotorblätter, und/oder es kann die zusätzliche Leistung gegebenenfalls abgegeben werden. Es kommt auch in Betracht, dass die Leistung zum Einspeichern von Rotationsenergie in dem Rotor der Windenergieanlage verwendet wird.

Es kann somit auch auf einfache Art und Weise eine sofortige Reaktion auf eine Änderung der Netzspannung erreicht werden, weil die sich unmittelbar ergebende physikalische Reaktion ausgenutzt wird.

Eine Änderung der Netzspannung kann dabei beispielsweise auch eine Veränderung der Netzfrequenz sein, die beispielsweise zu einer Erhöhung des Phasenwinkels führen kann. Auch das wird zu einer Veränderung des Einspeisestroms führen, der sich beispielsweise auch in seiner Stromamplitude erhöhen kann. Eine Frequenzänderung im Netz kann dann sofort und unmittelbar zu einem entsprechend veränderten Einspeisestrom führen, ohne dass dies zuvor von der einspeisenden Windenergieanlage erfasst und ausgewertet werden muss. Ebenso kann sich in einem anderen Fall auch eine Verringerung des Phasenwinkels ergeben, die unter anderem zu einer Verringerung des eingespeisten Stroms führen kann.

Die vorgeschlagenen Maßnahmen werden bevorzugt mit wenigstens einer Windenergieanlage oder einem Windpark durchgeführt. Es kommt aber ein Kraftwerk oder eine Erzeugungseinheit in Betracht, das bzw. die wenigstens eine Windenergieanlage und eine Kombination mit Speichern, steuerbaren Verbrauchern und/oder anderen regenerativen Erzeugern aufweist bzw. als eine solche Kombination ausgebildet ist.

Vorzugsweise erfolgt das verzögerte Nachführen mit einer vorbestimmten Verzögerungsdynamik. Dadurch kann Einfluss genommen werden auf die Reaktion besonders des eingespeisten Stroms auf eine solche Änderung der Netzspannung. Durch eine stärkere Verzögerung kann insbesondere eine stärkere Ausgleichsreaktion ermöglicht werden und umgekehrt. Ändert sich die Netzspannung, also insbesondere in ihrer Amplitude und ihrer Phasenlage in Bezug auf das Referenzsystem, führt eine verzögerte Nachführung nicht nur dazu, dass eine erste Ausgleichsreaktion, besonders eine resultierende Stromänderung des Einspeisestroms, zugelassen wird, sondern es kann regelmäßig auch dazu führen, dass sich die Abweichung zwischen Netzspannung und Referenzsystem noch erhöht. Die Ausgleichsreaktion kann sich dann auch noch erhöhen.

Vorzugsweis wird vorgeschlagen, dass für das verzögerte Nachführen benötigte Zusatzleistung oder daraus entstehende Überschussleistung aus Rotationsenergie gedeckt wird bzw. als Rotationsenergie eingespeichert wird, und/oder aus einem Energiespeicher, besonders Batteriespeicher genommen wird bzw. in einen solchen eingespeichert wird. Dazu kann ein entsprechender Batteriespeicher vorgesehen sein.

Vorzugsweise wird die Verzögerungsdynamik mittels einer Verzögerungsfunktion realisiert, und die Verzögerungsfunktion kann eine PT1-Funktion oder eine PT2-Funktion mit nicht überschwingender Sprungantwort sein. Es kommen auch ähnlich gut bedämpfte Funktionen in Betracht. Eine PT1-Funktion wird auch als Verzögerungsfunktion erster Ordnung bezeichnet. Sie hat den Vorteil, dass sie sehr einfach ist, und da sie eine lineare Funktion erster Ordnung ist, keinen Überschwinger hat. Durch sie kann auf einfache Art und Weise eine verzögerte Nachführung erreicht werden, ohne dass sie ein Aufschwingen im Netz begünstigt.

Eine PT2-Funktion kann auch als Verzögerungsfunktion zweiter Ordnung bezeichnet werden. Gegenüber der Verzögerungsfunktion erster Ordnung hat sie den zusätzlichen Vorteil, dass sie mit einem flachen Anstieg beginnen kann. Vorzugsweise wird sie so ausgewählt, dass sie nicht schwingt, also auf eine Sprungantwort ohne Überschwinger reagiert, also nur zwei reelle Eigenwerte aufweist. Es ist also anfangs ein ganz flacher Anstieg und damit eine totzeitähnliche Anfangsverzögerung realisierbar, die dennoch in einen steilen Anstieg übergehen kann. Ein solcher steiler Anstieg wird dann gegebenenfalls notwendig werden, damit sich das Referenzsystem nicht zu sehr von der Netzspannung entfernt. Nach einer gewissen Anfangsverzögerung kann also mit einer solchen Funktion dennoch eine schnelle Nachführung erreicht werden, ohne die beschriebenen gewünschten Effekte damit aufzugeben. Durch die Vorgabe einer nicht schwingenden und damit überschwingungsfreien Funktion kann eine positive stabilisierende Wirkung im Netz erreicht werden.

Eine Verzögerungsdynamik kann somit über solche Verzögerungsfunktionen eingestellt werden, oder sie wird anderweitig eingestellt. Die Einstellung kann dynamisch erfolgen, beispielsweise bedarfsabhängig, oder auch abhängig von anderen einspeisenden Einheiten im Netz, insbesondere auch davon, wie sich ein Ausbau regenerativer Einspeiseeinheiten verändert. Außerdem oder alternativ kann auch eine Einstellung abhängig davon vorgenommen werden, wo der Netzanschlusspunkt sich im Netz befindet. Insbesondere wird vorgeschlagen, dass eine solche Einstellung davon abhängt, ob der Netzanschlusspunkt zentral oder dezentral im Netz angeordnet ist.

Über die Verzögerungsfunktion kann auch eingestellt werden, wie viel oder wie schnell, bzw. wie langsam eine Momentanreservebereitstellung erfolgen soll, bzw. wie schnell eine Leistungsänderung erfolgen soll, bzw. wie schnell wieder zur Nennwirkleistung zurückgekehrt wird. Vorzugsweise wird vorgeschlagen, dass eine solche Momentanreservebereitstellung bzw. Leistungsänderung an einem zentralen Netzanschlusspunkt höher ist, als an einem dezentralen Netzanschlusspunkt.

Erfindungsgemäß wird vorgeschlagen, dass zum verzögerten Nachführen der Netzfrequenz ein tatsächlicher Phasenwinkel zwischen erzeugter Ausgangsspannung und Netzspannung erfasst wird, ein Differenzwinkel zwischen vorgegebenem Phasenwinkel und erfasstem Phasenwinkel gebildet wird, der Referenzwinkel so verändert wird, dass sich der Differenzwinkel dem Betrage nach mit der Verzögerungsfunktion verringert und die Referenzfrequenz an den so veränderten Referenzwinkel angepasst wird. Es wird also eine Abweichung zwischen vorgesehenem und tatsächlichem Phasenwinkel erfasst. Das verzögerte Nachführen des Referenzsystems betrifft dann zunächst das Nachführen des Referenzwinkels, um dadurch auch wieder den Phasenwinkel auf den gewünschten Phasenwinkel zu bringen. Die resultierende Veränderung des Referenzwinkels wird dann dazu verwendet, die Referenzfrequenz anzupassen. Wenn, wie in einem Fall, die Änderung des Phasenwinkels auf eine Frequenzänderung der Netzspannung zurückzuführen wäre, würde der Phasenwinkel kontinuierlich größer werden. Durch das Nachführen wird zumindest auch erreicht, dass sich der Phasenwinkel nicht weiter vergrößert. Dann, wenn das erreicht ist, läuft aber der veränderte Referenzwinkel mit der Netzfrequenz um. Genau das wird nun ausgenutzt, die Referenzfrequenz anzupassen. Aus dem veränderten Referenzwinkel, bzw. veränderten Einspeisewinkel, kann somit die Referenzfrequenz neu bestimmt werden. Damit wird auch die Referenzfrequenz der Netzfrequenz verzögert nachgeführt.

Vorzugsweise wird die Referenzfrequenz in einer Starteinstellung, also besonders dann, wenn das Verfahren gestartet und das Erzeugen des Referenzsystems gestartet wird, auf die Netzfrequenz gesetzt. Sobald das Referenzsystem dann entsprechend arbeitet, kann auf eine verzögerte Nachführung umgeschaltet werden. Das Referenzsystem läuft dann also grundsätzlich eigenständig, außer dass es über die verzögerte Nachführung angepasst werden kann.

Gemäß einer Ausführungsform ist das Verfahren dadurch gekennzeichnet, dass sich durch das Erzeugen der Ausgangsspannung ein in das Versorgungsnetz eingespeister Strom ergibt und dass die Verzögerungsfunktion oder Verzögerungsdynamik so gewählt wird, dass bei einer Veränderung wenigstens eines Zustandes im Versorgungsnetz, also insbesondere einer Veränderung der Netzspannung in ihrer Amplitude, Frequenz und/oder Phasenlage, die Erzeugung der Ausgangsspannung im Wesentlichen zunächst unverändert bleibt, sodass einer resultierenden Veränderung des eingespeisten Stroms zunächst nicht wesentlich entgegengewirkt wird, sodass das Verfahren auf die Veränderung des wenigstens einen Netzzustandes unmittelbar mit einem veränderten eingespeisten Strom reagiert.

Es kann somit erreicht werden, dass die Ausgangsspannung zunächst so gehalten wird, dass auf eine Veränderung eines Zustandes im Netz unmittelbar und instantan durch einen veränderten Strom reagiert wird.

Gemäß einer weiteren Ausführungsform wird vorgeschlagen, dass in einem Nachführbetrieb wenigstens ein in einem Normalbetrieb vorgegebener Grenzwert um einen vorbestimmten Toleranzwert überschritten werden darf. Dabei ist ein Nachführbetrieb ein solcher, bei dem das Referenzsystem der Netzspannung nachgeführt wird und in wenigstens einer Größe wenigstens um eine vorbestimmte Mindestabweichung von der Netzspannung abweicht. Es wird hier also erst dann von einem Nachführbetrieb gesprochen, wenn die Abweichung, um die das Referenzsystem nachgeführt werden soll, signifikant ist. Anderenfalls wird von einem Normalbetrieb ausgegangen.

Hier liegt die Erkenntnis zugrunde, dass eine solche signifikante Abweichung sehr selten auftreten wird und dass Grenzwerte, besonders für Strom, Leistung und Temperatur, zwar grundsätzlich einzuhalten sind, aber eine kurzzeitige Überschreitung, besonders wenn sie nur sehr selten auftritt, keinen nennenswerten Schaden anrichtet. Insoweit wird ein solches Überschreiten eines Grenzwertes auch nur für einen solchen Nachführbetrieb vorgesehen, wenn eine vorbestimmte Mindestabweichung von der Netzspannung vorliegt. Eine solche vorbestimmte Mindestabweichung deutet dann auch darauf hin, dass das Netz eine signifikante Störung aufweist.

Dieses Zulassen solcher Grenzwertüberschreitungen in Ausnahmefällen schafft es, dass das Referenzsystem der Netzspannung verzögert nachgeführt werden kann. Anderenfalls müsste gegebenenfalls eine sofortige Nachführung oder andere Beschränkung vorgenommen werden, um solche Grenzwertüberschreitung zu vermeiden. Somit wird durch diese Maßnahme auch erreicht, dass die zuvor beschriebenen Ausgleichsreaktionen zugelassen werden und sich im Grunde entfalten können.

Insbesondere kommen hierfür die folgenden Grenzwerte in Betracht. Es kann der vorgegebene Grenzwert ein maximaler Einspeisestrom sein und die vorbestimmte Mindestabweichung wenigstens 10 % des maximalen Einspeisestroms betragen. Eine weitere Möglichkeit ist, dass der vorgegebene Grenzwert eine maximal einzuspeisende Leistung ist und die vorbestimmte Mindestabweichung wenigstens 10 % der maximal einzuspeisenden Leistung beträgt. Bei diesen beiden Varianten kann also wenigstens mit 110 % des maximalen Einspeisestroms bzw. 110 % der maximal einzuspeisenden Leistung eingespeist werden.

Es kommt auch in Betracht, dass der vorgegebene Grenzwert eine maximal zulässige Temperatur eines die Ausgangsspannung generierenden Wechselrichter ist und dass dabei die vorbestimmte Mindestabweichung wenigstens 10 K (Kelvin) beträgt. Eine Temperaturüberhöhung von 10 K über einem Grenzwert kann für das betreffende Gerät eine erhebliche Belastung darstellen, sodass solche Grenzwerte eingehalten werden müssen. In diesem seltenen Ausnahmefall, dass diese Überschreitung kurz und sehr selten ist, kann eine solche Überhöhung aber in Kauf genommen werden.

Es kommt auch in Betracht, dass der vorgegebene Grenzwert ein maximal zulässiger Wert eines Integrals der Temperatur über die vorbestimmte Zeit ist, und die vorbestimmte Mindestabweichung wenigstens 10K^{∗}s beträgt. Besonders bei einer Temperaturerhöhung in Halbleiterbauelementen kann es auf die Dauer der Überhöhung ankommen. Je höher die Überhöhung ist, umso kürzer darf sie zugelassen werden. Dafür wird vorgeschlagen, einen integrierten Wert der Temperatur über die Zeit zu betrachten. Vorzugsweise wird zur Umsetzung ein thermisches Wechselrichtermodell zu Grunde gelegt.

Weiterhin kann auch der vorgegebene Grenzwert eine maximale Frequenzänderung sein und die vorbestimmte Mindestabweichung wenigstens 0,5Hz/s betragen.

Erst wenn das Referenzsystem der Netzspannung nachgeführt wird und in wenigstens einer Größe wenigstens um eine vorbestimmte Mindestabweichung von der Netzspannung abweicht, liegt ein solcher Nachführbetrieb vor. Vorzugsweise betrifft eine solche vorbestimmte Mindestabweichung eine Abweichung der Referenzfrequenz von der Netzfrequenz um wenigstens 0,5 % bezogen auf die Nennfrequenz des elektrischen Versorgungsnetzes. Gemäß einer weiteren Ausgestaltung betrifft die vorbestimmte Mindestabweichung eine Abweichung der Referenzamplitude von der Spannungsamplitude der Netzspannung um einen Wert von wenigstens 10 % der Nennspannung des elektrischen Versorgungsnetzes, zuzüglich einer etwaigen Differenz, die auch im stationären Betrieb zwischen der Referenzamplitude und der Amplitude der Netzspannung vorgesehen ist.

Gemäß einer weiteren Ausführungsform betrifft die vorbestimmte Mindestabweichung eine Abweichung des gemessenen oder erfassten Phasenwinkels von dem vorgegebenen Phasenwinkel um wenigstens 20°.

Gemäß einer Ausführungsform wird vorgeschlagen, dass die Referenzfrequenz abhängig davon der Netzfrequenz nachgeführt wird, ob sich die Netzfrequenz der nominalen Frequenz nähert oder sich von ihr entfernt. Eine solche nominale Frequenz kann insbesondere eine Nennfrequenz des betreffenden Versorgungsnetzes sein, also 50 Hz für das europäische Verbundnetz und 60 Hz für das US-amerikanische Netz, um nur zwei Beispiele zu nennen.

Dazu wird dazu vorgeschlagen, dass das Nachführen der Referenzfrequenz stärker verzögert wird, wenn sich die Netzfrequenz von der nominalen Frequenz entfernt, als wenn sie sich ihr nähert. Somit wird die Referenzfrequenz schneller für Änderungen in Richtung zur nominalen Frequenz nachgeführt, als wenn sich die Frequenz von der nominalen Frequenz entfernt. Durch diesen Vorschlag, also die unterschiedliche Verzögerung der Nachführung, kann erreicht werden, dass bei einem Nachführen in Richtung zur nominalen Frequenz hin das schnellere Nachführen zu schwächeren Ausgleichsreaktionen führt. Außerdem erreicht die Referenzfrequenz schneller die Netzfrequenz, die sich im Grunde in eine gewünschte Richtung bewegt. Ändert sich die Netzfrequenz von der nominalen Frequenz weg, entfernt sich also von ihr, wird versucht, durch eine möglichst starke Verzögerung der Nachführung dieser Tendenz der Netzfrequenz, sich zu entfernen, möglichst stark entgegenzuwirken.

Gemäß einer Ausführungsform wird vorgeschlagen, dass die Referenzfrequenz auf einen Wert zwischen der Netzfrequenz und der nominalen Frequenz gesetzt wird. Es wird hier also künstlich eine von der Netzfrequenz abweichende Referenzfrequenz vorgegeben. Entsprechend ergibt sich eine Abweichung zwischen dem Referenzsystem und der Netzspannung, und es können Ausgleichsreaktionen entstehen, die auch gewünscht sind, um die Netzfrequenz dadurch in Richtung zur nominalen Frequenz zu beeinflussen. Besonders kann hier auf einfache Art und Weise das vorhandene Konzept nicht nur zum Nachführen der Ausgangsspannung der Netzspannung erreicht werden, sondern auch positiv in eine gewünschte vorgegebene Richtung Einfluss genommen werden.

Dadurch kann erreicht werden, dass der Wechselrichter, der die Ausgangsspannung einstellt, selbst auch eine Frequenzvorgabe machen kann. Insoweit diese abweichende Frequenz besonders auch zu starken Veränderungen des Phasenwinkels führt, kann dann das verzögerte Nachführen einsetzen und gegebenenfalls die Referenzfrequenz und das Referenzsystem insgesamt wieder der Netzspannung angleichen.

Ein ähnliches Phänomen tritt auch bei einspeisenden Synchrongeneratoren auf, die mit einem solchen elektrischen Versorgungsnetz unmittelbar gekoppelt sind. Solche Synchrongeneratoren führen dann rein physikalisch auch ihren Polradwinkel bzw. ihre Polspannung, die im Grunde wie ein Spannungszeiger umläuft, diesem Spannungszeiger der Netzspannung nach. Dabei kommt es aber regelmäßig zu einem Überschwingen, besonders bedingt durch die Trägheit des jeweiligen Synchrongenerators. Dadurch können im Ergebnis auch Frequenzpendelungen auftreten.

Um dieses Problem zumindest zu reduzieren, wird hier vorzugsweise eine nicht überschwingende Nachführfunktion vorgesehen. Eine solche nicht überschwingende Nachführfunktion, also die Verzögerungsfunktion, wird somit vorzugsweise als PT1-Funktion vorgeschlagen, oder als PT2-Funktion mit einem vorgegebenen Verhalten, das nicht überschwingt. Dies sind zwei einfache und gut beschreibbare Funktionen, es können aber auch grundsätzlich andere Funktionen verwendet werden, wobei diese nicht oder zumindest nur sehr wenig überschwingen sollten.

Wird der Referenzzeiger einem sich sprunghaft veränderten Spannungszeiger der Netzspannung nachgeführt und daraus jeweils die Referenzfrequenz abgeleitet, so kommt es zwangsläufig zunächst zu einer Frequenzänderung, zum Beispiel einer Frequenzerhöhung, wenn die sprunghafte Veränderung des Spannungszeigers der Netzspannung zu einer Vergrößerung des Phasenwinkels geführt hat. Eine solche sprunghafte Veränderung kann auch auftreten, ohne dass sich die Netzfrequenz verändert. Beim Nachführen würde die Referenzfrequenz dann zunächst ansteigen und dann, wenn der Referenzzeiger dem Spannungszeiger der Netzspannung erfolgreich nachgeführt wird, sich wieder besonders auf die Netzfrequenz verringern. Erfolgt hier die Nachführung ohne Überschwinger, treten bei der Referenzfrequenz keine Pendelungen auf. Die Referenzfrequenz erhöht sich einmal und kehrt dann wieder zu dem Frequenzwert der Netzfrequenz zurück, ohne dabei darunter abzufallen, ohne also auch in die andere Richtung auszuschlagen. Jedenfalls insoweit kann mit der vorgeschlagenen Lösung ein anderes Verhalten erreicht werden als von einem Synchrongenerator bekannt ist. Dieses andere Verhalten kann wohl als besser bezeichnet werden.

Außerdem wird ein Verfahren zum Steuern mehrerer an einem elektrischen Versorgungsnetz an mehreren Netzanschlusspunkten angeschlossener Windenergieanlagen vorgeschlagen, wobei diese Windenergieanlagen jeweils zum Einspeisen elektrischer Leistung an einem der Netzanschlusspunkte vorbereitet sind. Für diese Windenergieanlagen wird vorgeschlagen, ein Verfahren zum Einspeisen elektrischer Leistung gemäß wenigstens einer vorstehend beschriebenen Ausführungsform zu verwenden. Es kann dadurch erreicht werden, dass diese mehreren Windenergieanlagen zu einer Netzstützung beitragen und zusammen, besonders wenn sehr viele Windenergieanlagen so betrieben werden, einen signifikanten Beitrag leisten können. Das Verfahren zum Einspeisen elektrischer Leistung gemäß wenigstens einer der vorstehend beschriebenen Ausführungsformen eignen sich besonders durch das verzögerte Nachführen des Referenzsystems dazu, dass mehrere Windenergieanlagen auf ähnliche Art und Weise auf Veränderung im Netz reagieren.

Besonders wenn viele Windenergieanlagen zunächst einen Ausgleichsvorgang bzw. Ausgangsreaktionen auf eine Änderung im elektrischen Versorgungsnetz zulassen, besteht auch die Chance, dass die Ausgleichsreaktionen Wirkung zeigen und besonders eine geänderte Leistungssituation im elektrischen Versorgungsnetz ausgleichen können oder insbesondere die Netzspannung in einen vorigen Zustand zurückführen können.

Gemäß einer Ausführungsform wird vorgeschlagen, dass zunächst für jeden der mehreren Netzanschlusspunkte eine Ortseigenschaft bestimmt wird. Diese Ortseigenschaft wird als ein Maß für eine funktionale Position des Netzanschlusspunktes in Bezug auf eine Kopplungsstärke des jeweiligen Netzanschlusspunktes für das elektrische Versorgungsnetz verwendet. Diese Ortseigenschaft gibt also an, wie stark oder schwach dieser Netzanschlusspunkt mit dem elektrischen Versorgungsnetz gekoppelt ist. Die Stärke der Kopplung gibt an, wie stark sich Änderungen des elektrischen Versorgungsnetzes an dem betreffenden Netzanschlusspunkt auswirken und umgekehrt. Bspw. kann sich die Stärke der Kopplung daraus ergeben, ob dieser Netzanschlusspunkt funktional eher zentral oder dezentral angeordnet ist. Es muss aber nicht damit übereinstimmen, wie zentral oder dezentral der Netzanschlusspunkt ist.

Diese Ortseigenschaft bzw. das Maß gibt somit auch an, wie diese Anordnung des betreffenden Netzanschlusspunktes in Bezug auf andere Einspeiseeinrichtungen im Netz und Verbraucher im Netz ist. Hierbei wird besonders berücksichtigt, wie dominant der jeweilige Netzanschlusspunkt in seinem Bereich des Netzes ist. Je dominanter der Netzanschlusspunkt bzw. die Windenergieanlage oder der Windpark des Netzanschlusspunktes dort für das elektrische Versorgungsnetz ist, umso stärker ist seine Kopplung, jedenfalls verglichen mit Netzanschlusspunkten, die gleich oder ähnlich viel Leistung in das Netz einspeisen.

Es wird dann vorgeschlagen, wenigstens eine Betriebseinstellung jeweils wenigstens einer der Windenergieanlagen in Abhängigkeit der Ortseigenschaft des Netzanschlusspunktes vorzugeben, über den die wenigstens eine Windenergieanlage einspeist. Der Einfachheit halber kann zum Erläutern von einer Windenergieanlage für jeden Netzanschlusspunkt ausgegangen werden. Es wird dann eine Betriebseinstellung der Windenergieanlage in Abhängigkeit ihrer Ortseigenschaft, also der Ortseigenschaft ihres Netzanschlusspunktes, vorgegeben. Eine solche Betriebseinstellung betrifft besonders Eigenschaften der Windenergieanlage, die das Einspeisen beeinflussen, besonders Eigenschaften, die eine Reaktion auf Änderungen von Zuständen des elektrischen Versorgungsnetzes betreffen. Beispiele dazu werden nachfolgend noch erläutert. Häufig wird allerdings von einem Windpark auszugehen sein, der mehrere, insbesondere viele Windenergieanlagen umfasst. Ein solcher Windpark wird hier auch dadurch definiert, dass alle seine Windenergieanlagen über denselben Netzanschlusspunkt in das elektrische Versorgungsnetz einspeisen. In diesem Fall, wenn ein Windpark vorliegt, insbesondere wenn an jedem betrachteten Netzanschlusspunkt ein Windpark vorliegt, können diese Betriebseinstellungen jeweils mehrere oder alle Windenergieanlagen desselben Parks, also desselben Netzanschlusspunktes, betreffen.

Die Ortseigenschaft gibt also an, wie stark der Netzanschlusspunkt mit dem elektrischen Versorgungsnetz gekoppelt ist.

Vorzugsweise wird eine Drehzahlkennlinie in Abhängigkeit der Ortseigenschaft vorgegeben, nämlich insbesondere so, dass die Drehzahl umso höher ist, je stärker der betreffende Netzanschlusspunkt mit dem elektrischen Versorgungsnetz gekoppelt ist. Das kann bspw. auch davon abhängen, wie zentral der Netzanschlusspunkt im Versorgungsnetz angeordnet ist. Oftmals, aber nicht unbedingt ist die Kopplung umso stärker, je zentraler der Netzanschlusspunkt im elektrischen Versorgungsnetz angeordnet ist. Mit dem Vorgeben einer Drehzahlkennlinie mit besonders hoher Drehzahl kann dadurch Rotationsenergie im Rotor der Windenergieanlage gespeichert werden. Meist gibt es zu jedem Betriebspunkt, besonders zu jeder Windgeschwindigkeit, eine optimale Drehzahl. Diese kann erhöht werden, um dadurch entsprechend mehr Rotationsenergie bereitstellen zu können. Dabei kann eine Windenergieanlage häufig mit einer höheren oder niedrigeren Drehzahl als optimal betrieben werden, ohne den optimalen Punkt signifikant zu verlassen.

Obwohl für eine Netzstützung häufig auch Blindleistung eingespeist wird, wurde nun erkannt, dass besonders an schwach gekoppelten Netzanschlusspunkten des elektrischen Versorgungsnetzes besonders wenig Energie zur Netzstützung benötigt wird. Bei einer Position des Netzanschlusspunktes mit starker Kopplung wird hingegen häufig mehr Energie benötigt, und entsprechend wird vorgeschlagen, dort eine höhere Drehzahl einzustellen als bei einem dezentralen Netzanschlusspunkt. Es kommt hinzu, dass auch ein zu starkes Reagieren an schwach gekoppelten Netzanschlusspunkten eines elektrischen Versorgungsnetzes zu Schwingungen, besonders Netzpendelungen, führen kann. Entsprechend wird vorgeschlagen, das zu berücksichtigen und an schwach gekoppelten Netzanschlusspunkten, also Einspeisepunkten, das können auch dezentrale Einspeisepunkte sein, weniger Stützung bzw. weniger Stützenergie einzusetzen. Soweit hier Vorteile erläutert sind, zu berücksichtigen wie zentral oder dezentral ein Netzanschlusspunkt ist, sind diese auch als beispielhafte Erläuterungen zu Vorteilen zu verstehen, wie stark oder schwach die Kopplung eines Netzanschlusspunktes ist.

Gemäß einer Ausführungsform wird ergänzend oder alternativ vorgeschlagen, in Abhängigkeit der Ortseigenschaft ein zulässiges Drehzahlband vorzugeben, in dem die Drehzahl variiert werden darf, um dadurch Rotationsenergie bereitzustellen oder abzugeben, insbesondere so, dass das Drehzahlband um so breiter ist, je stärker der Netzanschlusspunkt mit dem Versorgungsnetz gekoppelt ist. Auch hier liegt die Erkenntnis zugrunde, dass eine relativ starke Drehzahlvariation, besonders um eine optimale Drehzahl herum, nur wenig Auswirkung auf die Leistung in dem Betriebspunkt hat. Es kann somit die Drehzahl um einen vorbestimmten Wert reduziert werden, besonders um Rotationsenergie abzugeben, was nur zu einer geringen Leistungseinbuße des neuen Betriebspunktes zu dem vorigen zur Folge hat.

Es wird nun vorgeschlagen, solche Variationen der Drehzahl unterschiedlich stark zuzulassen, nämlich abhängig von der Ortsfunktion des jeweiligen Netzanschlusspunktes. So kann eine hohe Drehzahlvariation und damit ein breites Drehzahlband zugelassen werden, wenn der Netzanschlusspunkt eine starke Kopplung aufweist. Es wird dann also eine größere Energiemenge aus Rotationsenergie zugelassen als bei einem Netzanschlusspunkt, der schwächer gekoppelt ist. Das bedeutet aber auch, dass eine stärkere Verschlechterung der Leistung des neuen Arbeitspunktes bei dem stark gekoppelten Netzanschlusspunkt in Kauf genommen wird, als bei dem schwächer gekoppelten.

Vorzugsweise wird die Verzögerungsdynamik des verzögerten Nachführens in Abhängigkeit der Ortseigenschaft ausgewählt. Dies erfolgt insbesondere so, dass umso stärker verzögert wird, je stärker der Netzanschlusspunkt mit dem Versorgungsnetz gekoppelt ist. Je stärker verzögert wird, je länger also verzögert wird, umso mehr Ausgleichsreaktion wird zugelassen. Auch dies wird vorschlagsweise daran angepasst, wie stark oder schwach der betreffende Netzanschlusspunkt gekoppelt ist. Ist er besonders stark gekoppelt angeordnet, wird eine stärkere Ausgleichsreaktion sinnvoll sein, und entsprechend wird dort eine stärkere Verzögerung vorgeschlagen.

Gemäß einer weiteren Ausführungsform wird gespeicherte Energie in Abhängigkeit der Ortseigenschaft bereitgestellt, nämlich insbesondere so, dass die gespeicherte Energie umso größer ist, je stärker der Netzanschlusspunkt mit dem Versorgungsnetz gekoppelt ist. Auch hier wird vorgeschlagen, die Erkenntnis umzusetzen, dass an einem stark gekoppelten Netzanschlusspunkt mehr Stützenergie benötigt werden kann.

Außerdem oder alternativ wird vorgeschlagen, dass ein Energiespeicher in Abhängigkeit der Ortseigenschaft bereitgestellt wird. Besonders soll der Energiespeicher umso größer sein, je stärker der Netzanschlusspunkt mit dem Versorgungsnetz gekoppelt ist. Demnach sind für unterschiedliche Netzanschlusspunkte unterschiedliche große Energiespeicher vorgesehen. Auch hier liegt wieder der Gedanke zugrunde, an einer Position mit starker Kopplung mehr Stützung vorzunehmen oder vornehmen zu können. Dafür kann entsprechend viel Energie nötig sein, für die entsprechend unterschiedlich große Energiespeicher vorgesehen werden.

Gemäß einer Ausführungsform wird besonders für das Verbinden zweier Netzabschnitte vorgeschlagen, eine hohe Momentanreserve an einem Rand des Versorgungsnetzes bereitzustellen, nämlich dort, wo das Verbinden durchgeführt werden soll, um für diesen Vorgang des Verbindens durch die hohe Momentanreserve eine Stabilisierung zu schaffen.

Gemäß einer weiteren Ausführungsform wird vorgeschlagen, dass Windenergieanlagen, die über unterschiedliche Netzanschlusspunkte in das elektrische Versorgungsnetz einspeisen, über eine Datenverbindung verbunden sind, die dazu eingerichtet ist, wenigstens eine der nachfolgend beschriebenen Aufgaben auszuführen.

Vorzugsweise werden Steuerdaten übertragen, um die Einspeisung an den unterschiedlichen Netzanschlusspunkten zu koordinieren. Dadurch kann erreicht werden, dass viele Windenergieanlagen, die selbst über unterschiedliche Netzanschlusspunkte einspeisen, koordiniert einspeisen und damit auch zusammen besonders für etwaige Netzstützungsmaßnahmen einen großen Beitrag leisten können.

Vorzugsweise kann über eine solche Datenverbindung die Auswahl der Nachführdynamiken der Windenergieanlagen der unterschiedlichen Netzanschlusspunkte koordiniert werden. Auch hierdurch kann erreicht werden, dass die Verhaltensweisen der Windenergieanlagen auch von ihren Positionen im elektrischen Versorgungsnetz abhängen. Sie können aber auch davon abhängen, wie die anderen Windenergieanlagen, die in dasselbe Versorgungsnetz einspeisen, reagieren. Dies kann hier besonders über das Einstellen der Nachführdynamik, also die Auswahl der Nachführdynamik, vorgenommen werden. Hier kommt besonders in Betracht, das Zeitverhalten von Nachführfunktionen auszuwählen.

Gemäß einer weiteren Ausführungsform wird vorgeschlagen, dass unterschiedliche Nachführdynamiken für die Windenergieanlagen unterschiedlicher Netzanschlusspunkte vorgegeben werden. Hierdurch soll bewusst vermieden werden, dass viele Windenergieanlagen gleich oder sogar so gut wie identisch reagieren. Dann besteht die Gefahr, dass es zu Regelschwingungen kommt. Durch das bewusste Auswählen unterschiedlicher Nachführdynamiken kann ein solches Überreagieren verhindert werden.

Es wird auch eine Windenergieanlage vorgeschlagen zum Einspeisen elektrischer Leistung an einem Netzanschlusspunkt in ein eine Netzspannung mit einer Netzfrequenz aufweisendes elektrisches Versorgungsnetz. Diese Windenergieanlage umfasst
- einen Rotor mit mehreren Rotorblättern und einem Generator zum Erzeugen elektrischer Leistung aus Wind,
- ein Referenzvorgabemittel zum Vorgeben eines Referenzsystems mit einer Referenzfrequenz, einem Referenzzeiger mit einem Referenzwinkel und einer Referenzamplitude einer zu erzeugenden Ausgangsspannung, wobei der Referenzwinkel mit der Referenzfrequenz umläuft und die Referenzfrequenz im Wesentlichen der Netzfrequenz entspricht,
- ein Phasenwinkelvorgabemittel zum Vorgeben eines Phasenwinkels als Phasenwinkel zwischen der Ausgangsspannung und der Netzspannung,
- ein Berechnungsmittel zum Berechnen eines mit dem Referenzwinkel umlaufenden Einspeisewinkels aus dem vorgegebenen Phasenwinkel, so dass sich zwischen einer mit dem Einspeisewinkel erzeugten Ausgangsspannung und der Netzspannung der vorgegebene Phasenwinkel einstellt, wenn die Referenzfrequenz mit der Netzfrequenz übereinstimmt,
- eine Einspeiseeinheit mit wenigstens einem Frequenzwechselrichter zum Erzeugen der Ausgangsspannung mit einer Spannungsamplitude in Abhängigkeit der Referenzamplitude, einer Frequenz in Abhängigkeit der Referenzfrequenz und dem Einspeisewinkel zum Einspeisen der erzeugten Leistung in das elektrische Versorgungsnetz und
- ein Nachführmittel zum verzögerten Nachführen des Referenzsystems dem Verhalten der Netzspannung gemäß den Verfahrensschritten des Anspruchs 1.

Der Rotor mit seinen Rotorblättern, vorzugsweise sind es drei, wird somit durch den Wind gedreht, und diese Drehbewegung erzeugt in dem Generator die elektrische Leistung. Zur besseren Steuerung wird vorgeschlagen, dass die Rotorblätter in ihrem Blattwinkel verstellbar sind.

Mit dem Referenzvorgabemittel, das beispielsweise als Teil eines Prozessrechners vorgesehen sein kann oder einfach ein Programm oder Unterprogramm in einer Steuerung bilden kann, wird ein Referenzsystem vorgegeben, besonders ein solches wie vorstehend bereits erläutert wurde.

Das Phasenvorgabemittel kann ebenfalls als Teil eines Prozessrechners oder einfach als Unterprogramm in einer Steuerung realisiert sein. Auch der hier vorgegebene Phasenwinkel wird als Phasenwinkel zwischen der Ausgangsspannung und der Netzspannung vorgegeben, wie oben bereits im Zusammenhang mit dem Verfahren erläutert wurde.

Auch das Berechnungsmittel zum Berechnen eines mit dem Referenzwinkel umlaufenden Einspeisewinkels kann als Teil einer Steuereinheit, des Prozessrechners oder einfach als Unterprogramm einer Steuerung realisiert werden. Es berechnet somit den Einspeisewinkel, der mit dem Referenzwinkel umläuft, wie vorstehend bereits erläutert wurde.

Zum Einspeisen ist eine Einspeiseeinheit vorgesehen, die wenigstens einen Frequenzwechselrichter oder auch einen Frequenzumrichter aufweist. Dieser Frequenzwechselrichter erzeugt die gewünschte Ausgangsspannung besonders durch Vorgeben eines entsprechenden gepulsten Spannungssignals. Es kann als Pulsweitenmodulation oder auch als Toleranzbandverfahren realisiert sein. Als Eingangsgröße verwendet diese Einspeiseeinheit die Referenzamplitude, die Referenzfrequenz oder eine davon abhängige Frequenz und den Einspeisewinkel.

Ein Nachführmittel zum verzögerten Nachführen des Referenzsystems mit dem Verhalten der Netzspannung kann ebenfalls als Teil einer Steuereinrichtung oder als Unterprogramm einer Steuerung realisiert sein. Das Nachführmittel erhält vorzugsweise als Eingang Werte eines erfassten Spannungszeigers der Netzspannung und führt den Referenzzeiger des Referenzsystems mit einer vorgegebenen Verzögerungsdynamik, insbesondere mit einer vorgegebenen Verzögerungsfunktion, nach. Insbesondere kann das so realisiert sein, dass aus den Werten des Spannungszeigers der Netzspannung unmittelbar Sollwerte für den Referenzzeiger gebildet werden und diese Sollwerte dann mit der gewünschten Verzögerungsfunktion verzögert werden. Die Sollwerte können also beispielsweise den Eingang eines solchen Verzögerungsblocks, der die Verzögerungsfunktion umsetzt, bilden, und dieser Block gibt entsprechend den so verzögerten Wert aus. Ändert sich dieser Sollwert sprunghaft, wird er somit durch die Verzögerungsfunktion so verändert, dass er sich wie die Sprungantwort der Verzögerungsfunktion verhält. Dieses Ergebnis ist dann der entsprechend nachgeführte Wert des Referenzsystems, also insbesondere des Referenzzeigers.

Vorzugsweise ist die Windenergieanlage dazu vorbereitet, wenigstens ein Verfahren auszuführen, wie vorstehend unter Bezugnahme auf wenigstens eine der Ausführungsformen des Einspeiseverfahrens erläutert wurde. Dazu kann die Windenergieanlage eine entsprechende Steuervorrichtung aufweisen, in der das entsprechende Verfahren implementiert ist.

Vorzugsweise weist die Windenergieanlage eine Datenübertragungseinrichtung auf, die zum Austausch von Daten über eine Datenverbindung mit wenigstens einer weiteren Windenergieanlage vorgesehen ist, wobei diese weitere Windenergieanlage ihrerseits über einen weiteren Netzanschlusspunkt in das elektrische Versorgungsnetz einspeist. Eine solche Datenübertragungseinrichtung kann kabelgebunden oder kabellos erfolgen. Gegebenenfalls kommt eine Kombination in Betracht.

Außerdem ist ein Koordinierungsmittel vorgesehen, das die Einspeisung der elektrischen Leistung der vorgeschlagenen Windenergieanlage mit dem Einspeisen der elektrischen Leistung der wenigstens einen weiteren Windenergieanlage koordiniert. Hierzu kann insbesondere eine Koordination hinsichtlich der vorgesehenen Dynamiken erfolgen. Es kann also koordiniert werden, welche Windenergieanlage mit welcher Verzögerungsdynamik oder Verzögerungsfunktion ihr Referenzsystem nachführt. Es kommt aber auch in Betracht, konkrete Einspeisewerte zu koordinieren, wie beispielsweise vorgesehene Phasenwinkel. Das Koordinierungsmittel kann als Teil einer Steuervorrichtung vorgesehen sein oder als Steuerprogramm in einer Steuerung implementiert sein, das die notwendigen Daten der Übertragungseinrichtung erhält bzw. zur Übertragung an diese übergibt.

Auch für eine solche Windenergieanlage, die mit wenigstens einer weiteren Windenergieanlage über eine Datenverbindung gekoppelt ist bzw. darüber kommuniziert, wird vorgeschlagen, dass diese ein Verfahren ausführt, dass also ein solches Verfahren in ihrer Steuereinrichtung implementiert ist, das oben im Zusammenhang mit Ausführungsformen beschrieben wurde, die das Einspeisen mittels mehrerer Windenergieanlagen über mehrere Netzanschlusspunkte betrifft.

Gemäß einer weiteren Ausführungsform wird für eine Windenergieanlage, die über eine Datenübertragungseinrichtung mit wenigstens einer weiteren, einen weiteren Netzanschlusspunkt verwendenden, Windenergieanlage kommuniziert, vorgeschlagen, dass ein Bestimmungsmittel zum Bestimmen einer Ortseigenschaft oder ein Eingabemittel zum Eingeben einer Ortseigenschaft vorgesehen ist. Das Bestimmungsmittel kann Teil einer Steuereinrichtung sein, oder es kann auch ein Unterprogramm einer Steuerung sein, das entsprechende Daten auswertet. Alternativ kann die Ortseigenschaft beispielsweise von Servicepersonal oder von einer zentralen Leitwarte, um nur zwei Beispiele zu nennen, eingegeben werden. Diese Ortseigenschaft bildet somit ein Maß dafür, wie stark oder schwach der jeweilige Netzanschlusspunkt und damit die diesen verwendende Windenergieanlage mit dem elektrischen Versorgungsnetz gekoppelt ist.

Dazu wird ein Vorgabemittel vorgeschlagen, das wenigstens eine Betriebseinstellung wenigstens einer der Windenergieanlagen in Abhängigkeit der Ortseigenschaft des Netzanschlusspunktes vorgibt. Das Vorgabemittel kann beispielsweise eine Drehzahlkennlinie auswählen und damit vorgeben, ob die betreffende Windenergieanlage mit einer optimalen oder eher einer höheren Drehzahl betrieben wird. Außerdem oder alternativ kann das Vorgabemittel ein Drehzahlband vorgeben, um ein weiteres Beispiel zu nennen. Das Vorgabemittel kann somit Teil der Steuereinrichtung sein, oder es kann als ein entsprechendes Programm oder Unterprogramm realisiert sein, indem es beispielsweise in der Anlagensteuerung implementiert ist.

Außerdem wird eine Anordnung mehrerer Windenergieanlagen zum Einspeisen elektrischer Leistung an mehreren Netzanschlusspunkten vorgeschlagen. Diese Anordnung umfasst wenigstens eine Datenübertragungseinrichtung zum Austauschen von Daten über eine Datenverbindung zwischen den Windenergieanlagen, die an den mehreren Netzanschlusspunkten in das elektrische Versorgungsnetz einspeisen. Dadurch kann eine Koordination zwischen den Windenergieanlagen vorgenommen werden, insbesondere in der Art und Weise wie oben im Zusammenhang mit Ausführungsformen bereits erläutert wurde.

Dabei verwendet diese Anordnung Windenergieanlagen gemäß wenigstens einer vorstehend beschriebenen Ausführungsform. Weiter bevorzugt setzt eine solche Anordnung wenigstens ein Verfahren gemäß wenigstens einer vorstehend beschriebenen Ausführungsform ein und außerdem oder alternativ ist die Anordnung mit Energiespeichern ausgestattet, wie vorstehend im Zusammenhang mit wenigstens einer Ausführungsform vorstehend beschrieben wurde.

Nachfolgend wird die Erfindung anhand von Ausführungsformen unter Bezugnahme auf die begleitenden Figuren beispielhaft näher erläutert.
- Fig. 1: zeigt eine Windenergieanlage in einer perspektivischen Darstellung.
- Fig. 2: zeigt einen Windpark in einer schematischen Darstellung.
- Fig. 3: zeigt ein Ablaufdiagramm zum Betrieb einer Windenergieanlage gemäß einer Ausführungsform.
- Fig. 4: veranschaulicht Bedeutung und Nachführung eines Referenzsystems anhand eines Zeigerdiagramms und einer zugehörigen Zeitfunktion.
- Fig. 5: veranschaulicht den Verlauf einer Verzögerungsfunktion erster Ordnung und einer überschwingungsfreien Verzögerungsfunktion zweiter Ordnung.
- Fig. 6: zeigt schematisch eine mögliche Netzstruktur zur Veranschaulichung zentraler und dezentraler Bereiche.
- Fig. 7: zeigt ein Diagramm zur Veranschaulichung einer Ortseigenschaft, die ein Maß dafür angibt, wie zentral oder dezentral eine Windenergieanlage angeordnet ist, mit Bezugnahme auf die Netzstruktur der Fig. 6.
- Fig. 8: veranschaulicht unterschiedliche Drehzahlkennlinien.
- Fig. 9: veranschaulicht Zusammenhänge zwischen Drehzahl und Leistung.

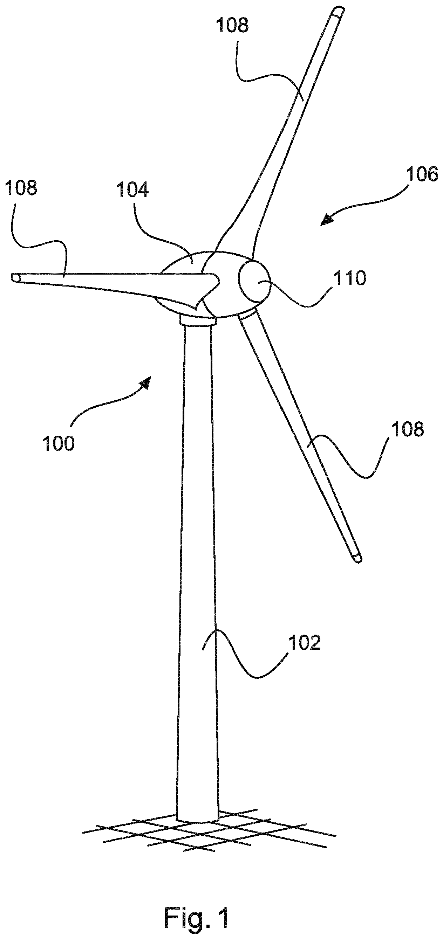

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

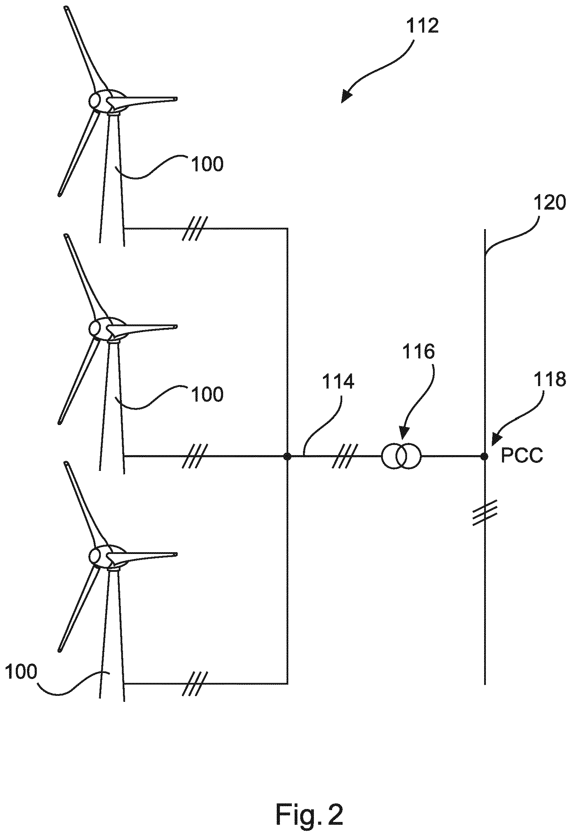

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

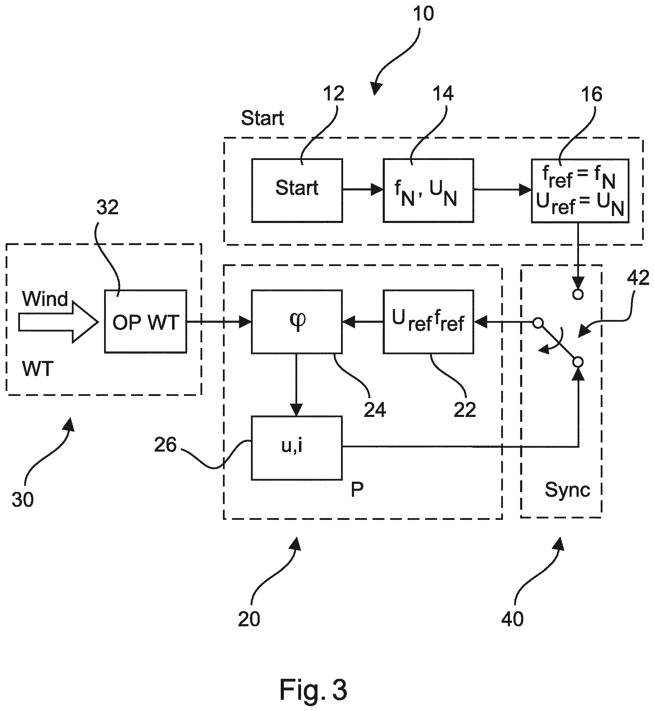

Fig. 3 veranschaulicht nun in einem Blockdiagramm den Ablauf einer Ausführungsform eines erfindungsgemäßen Verfahrens zum Einspeisen elektrischer Leistung in ein Versorgungsnetz. In einem Hochfahrabschnitt 10 veranschaulicht der Startblock 12 das Hochfahren der Turbine, also der Windenergieanlage und ihres Generators. Wenn ausreichend Wind vorhanden ist, kann die Windenergieanlage hier auf Nenndrehzahl hochfahren, ansonsten gegebenenfalls auf eine geringere Drehzahl. Ist die Windenergieanlage dann insoweit in Betrieb, erfolgt im Messblock 14 eine Messung der Netzspannung, nämlich zumindest der Netzfrequenz f_{N} und der Amplitude der Netzspannung U_{N}. Diese Werte erhält der Initiierungsblock 16, der ein Referenzsystem initiiert bzw. startet, nämlich so, dass die Referenzfrequenz f_{ref} der gemessenen Netzfrequenz f_{N} entspricht und dass die Spannungsamplitude U_{ref} des Referenzsystems der Spannungsamplitude U_{N} der Netzspannung entspricht.

Mit diesen Startwerten kann dann die Einspeisung im Leistungsbetriebsabschnitt 20 durchgeführt werden. Dazu wird in dem Referenzblock 22 ein Referenzsystem betrieben, und entsprechend liefert dieser Referenzblock 22 eine Spannungsamplitude U_{ref} und eine Referenzfrequenz f_{ref}. In dem Referenzblock 22 kann auch ein Nachführen des Referenzsystems vorgenommen werden.

Der Referenzblock 22 gibt dann diese Referenzwerte an den Phasenwinkelblock 24 weiter. Der Phasenwinkelblock berechnet einen Phasenwinkel, um einen Arbeitspunkt einzustellen. Dort kann also eingestellt werden, wie viel Blindleistung bzw. Blindstrom und wie viel Wirkleistung bzw. Wirkstrom eingespeist werden soll. Es können dann der Phasenwinkel und die Spannung eingestellt werden.

Der Phasenwinkelblock 24 erhält dazu auch Informationen bzw. zur Umsetzung Energie von der Windenergieanlage bzw. der Steuerung der Windenergieanlage, die insbesondere den Generator und die Rotorblätter und eine Azimutposition steuert. Dafür ist veranschaulichend der Windturbinenbereich 30 eingezeichnet. Dieser enthält einen Windturbinenblock 32, der den Arbeitspunkt der Windturbine steuert und entsprechende Daten an den Phasenwinkelblock 24 übergibt. Der Windturbinenblock 32 betrifft somit die Steuerung des Generators und seiner Peripherie, wohingegen der Leistungsbetriebsabschnitt 20 im Wesentlichen die Einspeisung der durch den Generator erzeugten elektrischen Leistung betrifft.

Im dem Phasenwinkelblock 24 wird somit der Phasenwinkel berechnet, um den Arbeitspunkt einzustellen, und das Ergebnis wird dann durch einen oder mehrere involvierte Wechselrichter umgesetzt. Dieser wenigstens eine Wechselrichter erzeugt entsprechend eine Ausgangsspannung, und dazu stellt sich auch ein resultierender elektrischer Strom ein. Das soll in dem Ausgangsblock 26 veranschaulicht werden, der zeigt, dass eine Momentanspannung u erzeugt wird und sich ein Momentanstrom i einstellt. Zunächst wird davon ausgegangen, dass sich gewünschte Werte einstellen, besonders, dass sich der im Phasenwinkelblock 24 berechnete Phasenwinkel einstellt. In diesem Fall kann dann in dem Synchronisierungsbereich 40 eine Synchronisierung festgestellt werden, nämlich, dass die Anfangswerte des Initiierungsblocks 16 zutreffen, sodass dann ein symbolisch dargestellter Synchronisierungsschalter 42 auf die Position umgeschaltet werden kann, die in der Fig. 3 gezeigt ist. Es bestimmen nun nicht mehr die gemessene Netzfrequenz f_{N} und die gemessene Spannungsamplitude U_{N} der Netzspannung unmittelbar das Referenzsystem, sondern das Referenzsystem läuft im Wesentlichen selbstständig in dem Referenzblock 22. Entsprechend ist hier ein geschlossener Kreis in dem Leistungsbetriebsabschnitt 20 vorhanden, der über den Referenzblock 22, den Phasenwinkelblock 24 und den Ausgangsblock 26 geht und zum Referenzblock 22 zurückführt.

Tritt nun eine Änderung in dem Versorgungsnetz auf, ändert sich also die Spannungsamplitude U_{N} der Netzspannung, die Netzfrequenz f_{N} und/oder die Phasenlage der Netzspannung, so hat das unmittelbar Auswirkung zumindest auf den Momentanstrom i, der in dem Ausgangsblock 26 veranschaulicht ist. Dadurch, dass das Referenzsystem nicht sofort nachgeführt wird, besonders dadurch, dass es nur durch ein Verzögerungsglied erster Ordnung nachgeführt wird, wird unmittelbar eine Momentanreserve aktiviert und eingespeist, oder entnommen, je nachdem, was für eine Änderung im Netz auftritt und welche Reaktion diese hervorruft. Es erfolgt dann aber eine verzögerte Nachführung, indem in dem Referenzblock 22 das Referenzsystem der geänderten Situation bzw. der geänderten Zustände im elektrischen Versorgungsnetz mit einer vorgegebenen Verzögerungsfunktion bzw. Verzögerungsdynamik nachgeführt wird. Die genannte sich einstellende Reaktion kann auch dazu führen, dass zunächst der in dem Phasenwinkelblock 24 berechnete Phasenwinkel ϕ geändert wird. Er wird dann entsprechend mit der genannten Verzögerungsfunktion oder Verzögerungsdynamik nachgeführt. Dafür wird ein Referenzzeiger des Referenzsystems einem Spannungszeiger der Netzspannung nachgeführt.

Dieses Nachführen erfolgt dann, unter Berücksichtigung der Verzögerungsdynamik, zumindest derart, dass schließlich der Referenzzeiger und der Spannungszeiger der Netzspannung synchron zueinander umlaufen, aber zwischen sich den gewünschten Phasenwinkel aufweisen. Läuft nun der Referenzzeiger in einer stationären Art und Weise um, kann aus diesem Umlaufen die Referenzfrequenz ermittelt werden und in dem Referenzblock 22 verwendet werden. Im Grunde ist die Referenzfrequenz die Ableitung des umlaufenden Referenzzeigers bzw. seines umlaufenden Winkels. Sie kann auch proportional dazu sein.

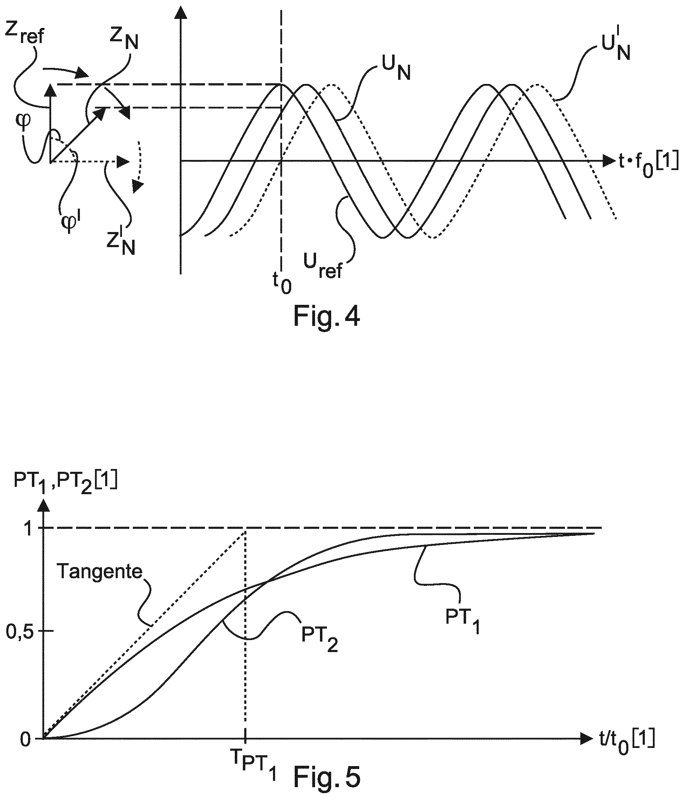

Die Bedeutung des Referenzzeigers Z_{ref} und des Spannungszeigers Z_{N} der Netzspannung soll in Fig. 4 veranschaulicht werden. Die Darstellung zeigt nur eine Phase und das kann eine Phase eines dreiphasigen Systems sein.

Zunächst wird in Fig. 4 eine Variante zugrunde gelegt, bei der der Referenzzeiger Z_{ref} des Referenzsystems auch einem Spannungszeiger der Ausgangsspannung entspricht, die der Wechselrichter ausgibt. Entsprechend zeigt Fig. 4 eine etwa sinusförmige Ausgangsspannung U_{ref} und eine etwa sinusförmige Netzspannung U_{N}. Außerdem ist gepunktet eine veränderte Netzspannung U'_{N} gezeigt, die später noch erläutert wird.

Die Spannungsverläufe entsprechen den umlaufenden Spannungszeigern Z_{ref}, Z_{N} und Z'_{N}. Diese Zeiger laufen hier im Uhrzeigersinn um, und zwischen dem Spannungszeiger Z_{ref} der Referenzspannung und dem Spannungszeiger Z_{N} der Netzspannung liegt der Phasenwinkel ϕ. Beide Zeiger laufen synchron um, und der Phasenwinkel ϕ ist somit konstant. Die in Fig. 4 gezeigte Stellung der Zeiger entspricht den Momentanwerten zum Zeitpunkt t₀. Im stationären Zustand laufen also diese Zeiger kontinuierlich um, und es ergibt sich über die Zeit der dargestellte sinusförmige Verlauf. Der Phasenwinkel ϕ ist also die Phasenverschiebung zwischen den beiden sinusförmigen Spannungsverläufen U_{ref} und U_{N}.

Ergibt sich nun eine Änderung in der Netzspannung, so ändert sich entsprechend auch der Spannungszeiger Z_{N} der Netzspannung. Es kommt hier in Betracht, dass sich seine Amplitude, also Länge, ändert, dass sich seine Umlaufgeschwindigkeit ändert, sodass der Phasenwinkel ϕ sich allmählich ändern würde, wenn sich der Spannungszeiger Z_{ref} des Referenzsystems nicht verändern würde, und es kommt in Betracht, dass der Spannungszeiger Z_{N} der Netzspannung in seiner Phasenlage springt, dass sich also der Winkel ϕ sofort um einen bestimmten Wert ändert. Diese drei Möglichkeiten können auch kombiniert auftreten. Fig. 4 veranschaulicht diesen letzten Fall, bei dem die Phasenlage des Spannungszeigers Z_{ref} der Netzspannung springt. Er springt nämlich auf den gepunktet eingezeichneten Spannungszeiger Z'_{N}. Der eingezeichnete Sprung von 45° ist recht groß und nur deswegen so gewählt, damit er zeichnerisch gut dargestellt werden kann.

Durch diesen veranschaulichten Sprung des Spannungszeigers Z_{N} zum neuen Spannungszeiger Z'_{N} ergibt sich ein veränderter Phasenwinkel ϕ'. Der so vergrößerte Phasenwinkel ϕ lässt sich auch in dem Zeitdiagramm ablesen, in dem der gepunktete sinusförmige Verlauf der geänderten Netzspannung U'_{N} auf der Zeitachse eine größere Verschiebung in Bezug auf die Referenzspannung U_{ref} aufweist. Um diesen ursprünglich vorgesehenen Phasenwinkel ϕ wieder zu erreichen, kann der Spannungszeiger Z_{ref} des Referenzsystems dem neuen Spannungszeiger Z'_{N} nachgeführt werden. Diese Nachführung erfolgt aber verzögert, vorzugsweise durch ein PT1-Verhalten verzögert.

Eine solche Verzögerungsfunktion erster Ordnung, die auch als PT1-Funktion bezeichnet wird, ist in Fig. 5 dargestellt, sollte dem Fachmann allerdings geläufig sein. Fig. 5 zeigt insoweit eine Sprungantwort einer Verzögerungsfunktion erster Ordnung PT1 bei einer Verstärkung von 1 und einem Sprung von 0 auf 1. Die gezeigte Sprungantwort, die insoweit auch diese Verzögerungsfunktion erster Ordnung PT1 charakterisiert, startet mit einer Anfangssteigung und nähert sich dann asymptotisch von unten dem Endwert 1. Die Anfangssteigung ist durch eine gestrichelte Tangente veranschaulicht, und als Zeitkonstante T_{PT1} dieser Verzögerungsfunktion erster Ordnung kann der Wert angesehen werden, bei dem die Tangente den Endwert erreicht. Somit kann auf einfache Weise ein Verhalten vorgegeben werden, das nicht überschwingt und bei dem auch gleichzeitig auf einfache Art und Weise eine Zeitkonstante vorgegeben werden kann. Diese Zeitkonstante ist insoweit ein Maß für die Verzögerung des Nachführens. Je größer diese Zeitkonstante T_{PT1} ist, umso größer ist die Verzögerung.

Als zweite Ausführungsform ist in der Fig. 5 als Verzögerungsdynamik die eines Verzögerungsgliedes zweiter Ordnung ohne Überschwinger eingezeichnet und wird dort als PT2 bezeichnet. Diese Funktion startet gegenüber der Verzögerungsfunktion erster Ordnung mit einem flachen Anstieg, wird dann steiler und nähert sich dann zunächst schneller, aber auch asymptotisch von unten dem Endwert. Diese Verzögerungsfunktion zweiter Ordnung PT2 kann auch über eine Zeitkonstante und ihr Dämpfungsverhalten parametriert werden. Somit ist auch hierdurch die Größe der Verzögerung einstellbar.

Fig. 5 zeigt insoweit zwei bevorzugte Verzögerungsfunktionen für das verzögerte Nachführen. Entsprechend sind auch Funktionen, die ein ähnliches Verhalten aufweisen, sinnvolle Funktionen zum Nachführen im Sinne der hier beschriebenen Lehre.

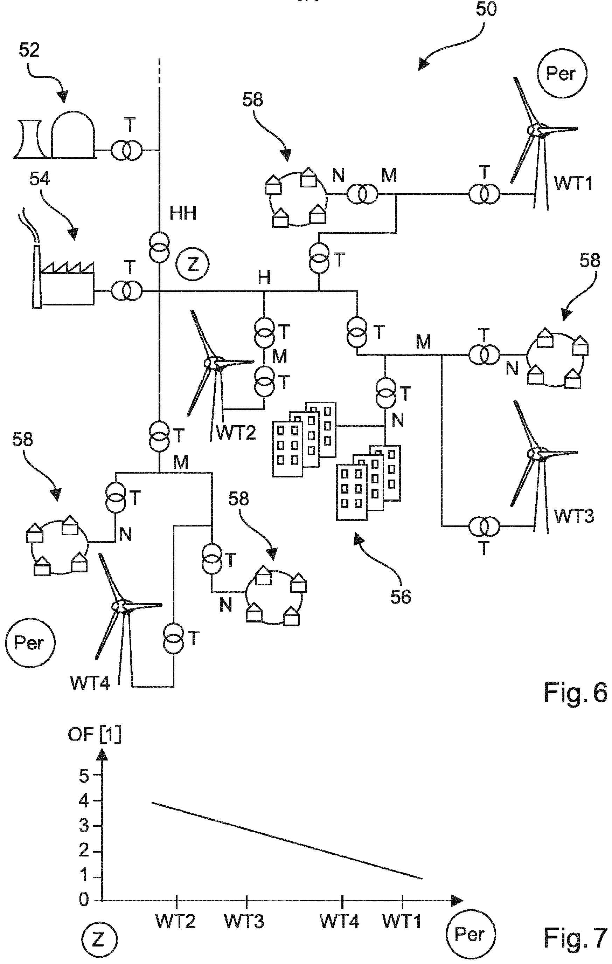

Fig. 6 zeigt ein elektrisches Versorgungsnetz 50 bzw. einen Teil davon in einer schematischen Darstellung. Dieses elektrische Versorgungsnetz 50 zeigt beispielhaft ein Großkraftwerk 52, einen industriellen Verbraucher 54 wie beispielsweise ein Stahlwerk oder eine andere Produktionsstätte sowie eine Stadt 56. Außerdem sind diverse kleinere Ortschaften 58 und vier Windenergieanlagen WT1 bis WT4 eingezeichnet. Das Netz weist verschiedene Netzabschnitte unterschiedlicher Spannung auf, nämlich ein Höchstspannungsnetz HH, ein Hochspannungsnetz H, mehrere Mittelspannungsnetze M und mehrere Niederspannungsnetze N. Zwischen diesen unterschiedlichen Netzen und zu dem Großkraftwerk 52, dem industriellen Verbraucher 54 und den Windenergieanlagen WT1 bis WT4 sind jeweils Transformatoren T angeordnet. Sowohl die Transformatoren T als auch die Ortschaften 58 werden in ihren Bezugszeichen nicht unterschieden, obwohl sie natürlich im Konkreten jeweils unterschiedlich ausgestaltet sind. Die Windenergieanlagen bzw. Windturbinen WT1 bis WT4 können auch repräsentativ jeweils für einen Windpark stehen, der jeweils mehrere Windenergieanlagen umfasst. Der jeweilige Transformator T einer der Windenergieanlagen WT1 bis WT4 kann auch zum Verständnis der hier erläuterten Lehre als Netzanschlusspunkt angesehen werden.

In diesem elektrischen Versorgungsnetz 50 stellt das Großkraftwerk 52 einen hinsichtlich der gelieferten Energiemenge großen Erzeuger dar. Der industrielle Verbraucher 54 stellt in diesem Sinne einen großen Verbraucher dar. Die Stadt 56 bildet ebenfalls einen vergleichsweise großen Verbraucher, und die Ortschaften 58 bilden jeweils eher kleinere Verbraucher. Die Windturbinen WT1 bis WT4 können jedenfalls im Vergleich zum Großkraftwerk 52 als kleinere Energieerzeugungseinheiten angesehen werden.

In einem Normalbetrieb, insbesondere dann, wenn auch der industrielle Verbraucher 54 betrieben wird und das Großkraftwerk 52 betrieben wird, wird es einen signifikanten Energiefluss von dem Großkraftwerk 52 zum industriellen Verbraucher 54 und einen signifikanten Energiefluss von dem Großkraftwerk 52 zur Stadt 56 geben. Wenn der industrielle Verbraucher 54 seine Leistungsabnahme verändert, besonders wenn er vom Netz geht oder zum Netz zugeschaltet wird, wird dies besonders stark an der Windturbine WT2 Auswirkungen haben. Gleiches gilt für Änderungen des Großkraftwerkes 52, besonders, wenn dieses vom Netz gehen sollte.

Außerdem werden Netzstützungsmaßnahmen, also besonders eine Erhöhung oder Reduzierung der eingespeisten Leistung der Windturbine WT2, vergleichsweise weniger unmittelbar erkennbare Wirkung haben als beispielsweise bei der Windturbine WT1, sofern diese etwa gleich groß sind. Entsprechend befindet sich die Windturbine WT2 besonders nah am Zentrum des elektrischen Versorgungsnetzes 50. Dieses Zentrum ist hier anschaulich als "Z" eingezeichnet. Als zwei Peripherien sind zwei Bereiche mit "Per" gekennzeichnet. Diese Kennzeichnung eines Zentrums und einer Peripherie ist allerdings anschaulich zu verstehen. Tatsächlich ist an der Höchstspannungsleitung HH in der Nähe des Großkraftwerks 52 durch Pünktchen angedeutet, dass das elektrische Versorgungsnetz dort noch fortgesetzt wird und sich somit auch weitere Zentren noch ergeben können. An diesem Beispiel soll besonders eine unterschiedlich starke Kopplung der einzelnen Netzanschlusspunkte veranschaulicht werden. Dazu wird hier vereinfachend und nur zum Zwecke der Veranschaulichung davon ausgegangen, dass die Stärke der Kopplung jedes Netzanschlusspunktes dem entspricht, wie zentral der in dem Versorgungsnetz angeordnet ist.

Dennoch kann jedenfalls für die bereits genannten Windturbinen WT2 und WT1 eine Aussage darüber gemacht werden, wie zentral oder dezentral sie sind. Die Windturbine WT2 ist demnach sehr zentral angeordnet bzw. speist sehr zentral in das Versorgungsnetz 50 ein, und die Windturbine WT1 ist sehr dezentral angeordnet bzw. speist sehr dezentral in das Versorgungsnetz 50 ein.

Entsprechend kann eine Ortseigenschaft oder als Wert ein Ortsfaktor OF vergeben werden, der eine Funktion in Abhängigkeit davon bildet, wie zentral oder dezentral ein Einspeisepunkt angeordnet ist. Dies ist in Fig. 7 veranschaulicht worden. Fig. 7 schlägt einen Ortsfaktor OF vor, der beispielhaft Werte von 1 bis 4 annehmen kann. Es können auch andere Wertebereiche verwendet werden, oder bspw. ein Maß von 0% bis 100% verwendet werden. Der hohe Wert von 4 deutet hier eine sehr zentrale Position eines Netzanschlusspunktes an und der Wert 1 eine sehr dezentrale Position des Netzanschlusspunktes. Entsprechend kann der Windturbine WT2 ein hoher Ortsfaktor, also eine Ortseigenschaft mit großem Wert, und der Windturbine WT1 ein kleiner Ortsfaktor, also eine Ortseigenschaft mit kleinem Wert, zugeordnet werden.

Die weiteren Windturbinen WT3 und WT4 der Fig. 6 liegen zwischen diesen beiden extremen Werten. Die Windturbine WT3 ist dezentraler als die Windturbine WT2, ist aber zentraler als die Windturbine WT1, weil sie in dasselbe Mittelspannungsnetz einspeist, an das auch die Stadt 56 angeschlossen ist. Die Windturbine WT4 ist insoweit dezentraler noch als die Windturbine WT3, aber zentraler als die Windturbine WT1, weil die Windturbine WT1 in ein Mittelspannungsnetz einspeist, an das eine Ortschaft 58 angeschlossen ist, wohingegen die Windturbine WT4 in ein Mittelspannungsnetz einspeist, an das zwei Ortschaften 58 angeschlossen sind. Dieses Ergebnis ist entsprechend in Fig. 7 eingezeichnet, sodass die Windturbine WT2 am zentralsten ist und über die Windturbine WT3, dann die Windturbine WT4 bis hin zur Windturbine WT1 die Anordnung immer dezentraler wird. Entsprechend nehmen auch die Ortsfaktoren OF in diese Richtung ab.

Diese Klassifizierung bzw. diese Bewertung kann vorzugsweise verwendet werden, um unterschiedlich starke Verzögerungen auszuwählen. Für eine besonders zentral angeordnete Windturbine wie die Windturbine WT2 kann eine besonders starke Verzögerung vogesehen sein. In Bezug auf eine Verzögerungsfunktion erster Ordnung gemäß Fig. 5 kann dafür eine besonders große Zeitkonstante T_{PT1} gewählt werden. Entsprechend würde bei einer Änderung der Netzspannung das vorgeschlagene Referenzsystem mit einem besonders großen Abstand nachgeführt werden, was zu einer großen Momentanreserve bzw. der Einspeisung einer großen Momentanreserve führen kann. Entsprechend kann eine dezentral aufgestellte Windenergieanlage mit einer kleineren Verzögerung auskommen, und es kann somit eine kleinere Zeitkonstante T_{PT1} gewählt werden, wenn eine Realisierung über eine solche Verzögerungsfunktion erster Ordnung vorgenommen wird.

Besonders zum Bereitstellen der benötigten Energie für eine solche Momentanreserve kann es vorteilhaft sein, die Windenergieanlage mit einer höheren Drehzahl zu betreiben, oder zumindest ein größeres Drehzahlband zuzulassen, damit eine entsprechend große Menge Rotationsenergie bereitgestellt werden kann. Meist gibt es für jede Windenergieanlage eine optimale Drehzahl zu jedem Betriebspunkt, besonders zu jeder Windgeschwindigkeit, auch wenn faktisch die Einstellung nicht über eine Messung der Windgeschwindigkeit erfolgt, kann dies doch zur Erläuterung dienen.

Dennoch kann eine Windenergieanlage mit einer höheren oder einer niedrigeren Drehzahl fast optimal betrieben werden, ohne dass große Verluste oder große Belastungen in Kauf genommen werden müssen. Wenn also eine Windenergieanlage besonders viel Momentanreserve bereitstellen soll, wie beispielsweise die Windturbine WT2 der Fig. 6, so kann dies durch Rotationsenergie in den Rotoren der Windenergieanlage erreicht werden. Wird die Drehzahl beispielsweise um 10 % erhöht, ist dadurch schon physikalisch etwa 20 % mehr Rotationsenergie vorhanden. Betrachtet man aber nur die abrufbare Rotationsenergie, denn es ist zweckmäßig, nur so viel Rotationsenergie abzurufen, dass die Anlage danach weiterläuft, so kann eine solche beispielhaft genannte Erhöhung der Drehzahl um 10 % bezogen auf die abrufbare Rotationsenergie eine noch viel höhere Energiebereitstellung als die genannten 20% erreichen.

Zur Umsetzung kann eine Windenergieanlage aus verschiedenen möglichen Drehzahlkennlinien eine entsprechende auswählen, nämlich eine mit höherer Drehzahl, wenn dies gewünscht ist, wie beispielsweise für die Windturbine WT2.

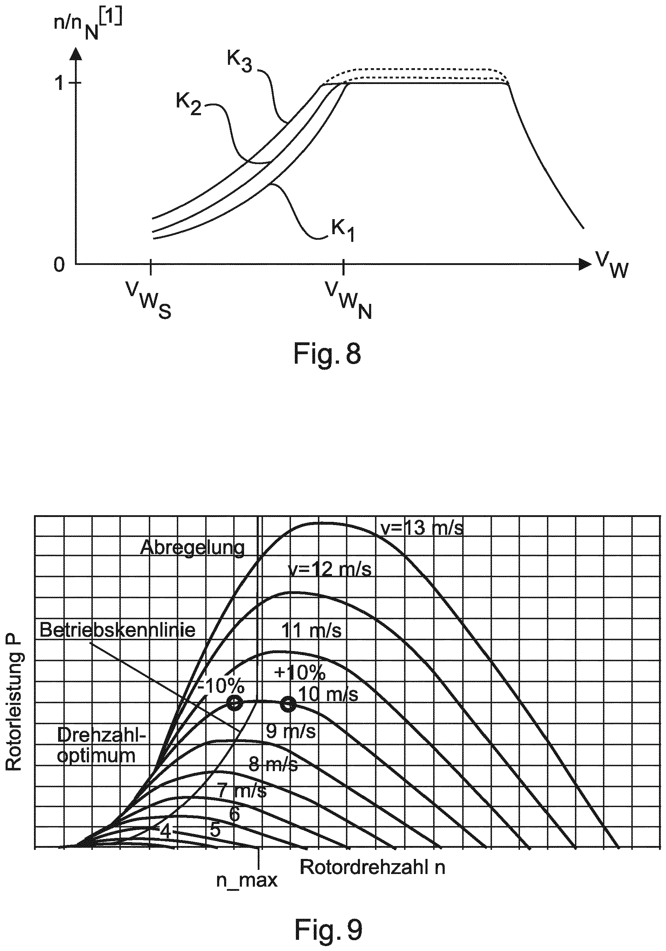

Solche unterschiedlichen Drehzahlkennlinien veranschaulicht die Fig. 8. Dort sind beispielhaft drei Drehzahlkennlinien K₁, K₂, und K₃ eingetragen. Diese Fig. 8 dient aber nur der Veranschaulichung, denn üblicherweise sind in einer Windenergieanlage Drehzahl-Leistungs-Kennlinien hinterlegt, aber keine Drehzahl-Windgeschwindigkeits-Kennlinien. In dem Teillastbereich, nämlich der Bereich, in dem die Windenergieanlage noch keine volle Leistung liefern kann und der in Fig. 8 zwischen der Startwindgeschwindigkeit V_{WS} und der Nennwindgeschwindigkeit V_{WN} liegt, kann unter Annahme eines optimalen stationären Betriebs jeder Windgeschwindigkeit auch eine Leistung zugeordnet werden. Jedenfalls können in diesem Teillastbereich unterschiedliche Kennlinien K₁, K₂, oder K₃ ausgewählt werden, je nachdem, ob eine höhere Drehzahl zum Bereitstellen einer höheren Energie gewünscht wird.

Wenn bei Nennwindgeschwindigkeit, oder früher, V_{VN} Nenndrehzahl n_{N} erreicht ist, kann aus Gründen der Anlagensicherheit meist keine höhere Drehzahl als die Nenndrehzahl verwendet werden. Allerdings könnte in Ausnahmesituationen, besonders wenn kurzzeitig mit einer Netzstützung zu rechnen ist, eine höhere Drehzahl in Betracht kommen. Das ist in Fig. 8 durch gepunktete Kennlinien im Bereich nach der Nennwindgeschwindigkeit V_{WN} angedeutet.

Fig. 9 zeigt eine Schar Leistungs-/Drehzahlkurven, nämlich Leistungs-/Drehzahlkurven für unterschiedliche Windgeschwindigkeiten von 3m/s bis 13 m/s. Die Darstellung ist nur schematisch, ohne Zahlenwerte. Es könnte eine Normierung jeweils auf die Nenndrehzahl bzw. die Nennleistung des Rotors angenommen werden.

Zunächst ist zu erkennen, dass die Leistung P, die in jeder der Kurven in Abhängigkeit der Drehzahl n aufgetragen ist, mit der Drehzahl bis zu einem Maximum ansteigt. Dort ist das Leistungsoptimum. Für Windgeschwindigkeiten von 3 bis 10 m/s ist dieses Optimum durch eine die Kurvenschar schneidende Betriebskennlinie eingezeichnet. Sie erreicht bei der Kurve für 10 m/s die maximale Drehzahl und zeigt somit bis dahin das Drehzahloptimum an. Für höhere Windgeschwindigkeiten liegt das Drehzahloptimum oberhalb der maximalen Drehzahl, die als n_max eingezeichnet ist. Deshalb geht ab der Leistungs-/Drehzahlkurve für 10 m/s die Betriebskennlinie senkrecht hoch, weil dann die Anlage in Bezug auf die Drehzahl abgeregelt wird.

Exemplarisch sind in der Leistungs-/Drehzahlkurve für 10 m/s zwei zur Betriebskennlinie abweichende Arbeitspunkte eingetragen, die um etwa 10% unter bzw. über der optimalen Drehzahl liegen. Es ist zu erkennen, dass diese Drehzahlabweichung von der optimalen Drehzahl nur zu einer wesentlich geringeren Verringerung der Leistung führt. Diese beiden abweichenden Arbeitspunkte können ein Drehzahlband angeben, in dem die Windenergieanlage operieren kann, um Momentanreserve bereitzustellen. Dieses Drehzahlband kann vorzugsweise in Abhängigkeit von Randbedingungen, für unterschiedliche Windenergieanlagen, für unterschiedliche Netzanschlusspunkte und/oder für unterschiedliche Situationen unterschiedlich breit gewählt werden.

Die vorgeschlagene Lösung schafft somit Möglichkeiten zur Einstellung des Leistungsflusses. Dazu gehört die sofortige, also instantane Reaktion, die durch diese Lösung erreicht werden kann. Dabei wird vorzugsweise ein spannungsprägendes System zugrunde gelegt. Ein Umrichter oder Wechselrichter generiert Spannung entsprechend einer internen Referenz, und ein Leistungsfluss stellt sich über Spannungsamplitude und Phasenwinkel zwischen dieser Ausgangsspannung am Umrichter, also der Umrichterspannung, und der Netzspannung ein. Es kann aber alternativ auch ein stromprägender Umrichter eingesetzt werden.

Eine Messung der Netzfrequenz kann zur erstmaligen Synchronisierung ausreichend sein, wie sie im Zusammenhang mit dem Hochfahrabschnitt 10 der Fig. 3 erläutert wurde.

Grundsätzlich fährt eine Regelung beide Größen, nämlich Spannung und Frequenz, im Umrichter nach, um Arbeitspunkte für Wirk- und Blindleistung einzustellen. Dafür ist das Nachführen des Referenzsystems vorgesehen. Entsprechend erfolgt eine Regelung des Phasenwinkels und der Spannungsamplitude.

Ein Ereignis im Netz, wie beispielsweise ein Phasensprung oder eine Änderung der Frequenz über die Zeit, führt zu einer sofortigen, also instantanen Reaktion, weil sich Spannung und Frequenz am Umrichter nicht sofort ändern und sich sofort andere Ströme einstellen. Spannung und Frequenz am Umrichter bzw. Wechselrichter werden nämlich zunächst mit dem Referenzsystem unverändert weitergeführt. Ein verzögertes Nachführen führt somit zur Bereitstellung instantaner Momentanreserve.

## Patentansprüche

1. Verfahren zum Einspeisen elektrischer Leistung an einem Netzanschlusspunkt (118) in ein eine Netzspannung mit einer Netzfrequenz (f_{N}) aufweisendes elektrisches Versorgungsnetz (50, 120) mittels wenigstens einer Windenergieanlage (100) oder eines Kraftwerks bestehend aus mindestens einer Windenergieanlage umfassend die Schritte:
- Vorgeben eines Referenzsystems mit einer Referenzfrequenz (fref), einem Referenzzeiger (Z_{ref}) mit einem Referenzwinkel und einer Referenzamplitude einer zu erzeugenden Ausgangsspannung (U_{ref}), wobei der Referenzwinkel mit der Referenzfrequenz umläuft und die Referenzfrequenz (f_{ref}) im Wesentlichen der Netzfrequenz (f_{N}) entspricht,
- Vorgeben eines Phasenwinkels (ϕ) als Phasenwinkel zwischen der Ausgangsspannung (U_{ref}) und der Netzspannung (U_{N}),
- Berechnen eines mit dem Referenzwinkel umlaufenden Einspeisewinkels aus dem vorgegebenen Phasenwinkel, so dass sich zwischen einer mit dem Einspeisewinkel erzeugten Ausgangsspannung und der Netzspannung der vorgegebene Phasenwinkel (ϕ) einstellt, wenn die Referenzfrequenz (f_{ref}) mit der Netzfrequenz (f_{N}) übereinstimmt,
- Erzeugen der Ausgangsspannung (U_{ref}) mit einer Spannungsamplitude in Abhängigkeit der Referenzamplitude, einer Frequenz in Abhängigkeit der Referenzfrequenz und dem Einspeisewinkel und
- verzögertes Nachführen des Referenzsystems dem Verhalten der Netzspannung, **dadurch gekennzeichnet, dass** zum verzögerten Nachführen:
- ein tatsächlicher Phasenwinkel zwischen der erzeugten Ausgangsspannung (U_{ref}) und der Netzspannung (U_{N}) erfasst wird,
- ein Differenzwinkel zwischen dem vorgegebenen Phasenwinkel und dem erfassten Phasenwinkel gebildet wird,
- der Referenzwinkel so verändert wird, dass sich der Differenzwinkel dem Betrage nach mit einer vorbestimmten Verzögerungsfunktion verringert und
- die Referenzfrequenz an den so veränderten Referenzwinkel angepasst wird.

2. Verfahren nach Anspruch 1, **dadurch gekennzeichnet, dass** das verzögerte Nachführen mit einer vorbestimmten Verzögerungsdynamik(PT1, PT2) erfolgt, und/oder, dass zum verzögerten Nachführen des Referenzsystems
- die Referenzfrequenz der Netzfrequenz verzögert nachgeführt wird und/oder
- die Referenzamplitude der Netzspannung verzögert nachgeführt wird.

3. Verfahren nach Anspruch 1 oder 2, **dadurch gekennzeichnet, dass** das verzögerte Nachführen bzw. die bzw. eine vorbestimmte Verzögerungsdynamik (PT1, PT2) einstellbar ist und/oder von dem Netzanschlusspunkt (118) abhängt und/oder dass für das verzögerte Nachführen benötigte Zusatzleistung oder daraus entstehende Überschussleistung aus Rotationsenergie gedeckt wird bzw. als Rotationsenergie eingespeichert wird, und/oder aus einem Energiespeicher, besonders Batteriespeicher genommen wird bzw. in einen solchen eingespeichert wird, und/oder, dass die Verzögerungsdynamik mittels der Verzögerungsfunktion realisiert wird und die Verzögerungsfunktion eine pt1- Funktion oder eine pt2-Funktion mit nicht überschwingender Sprungantwort ist.

4. Verfahren nach einem der vorstehenden Ansprüche, **dadurch gekennzeichnet, dass** die Referenzfrequenz in einer Starteinstellung (16) auf die Netzfrequenz gesetzt wird, und/oder, dass
- sich durch das Erzeugen der Ausgansspannung (U_{ref}) ein in das Versorgungsnetz (50,120) eingespeister Strom ergibt und dass
- die Verzögerungsfunktion oder Verzögerungsdynamik so gewählt wird, dass bei einer Veränderung wenigstens eines Zustandes im Versorgungsnetz die Erzeugung der Ausgangsspannung im Wesentlichen zunächst unverändert bleibt, so dass einer resultierenden Veränderung des eingespeisten Stromes zunächst nicht wesentlich entgegen gewirkt wird, so dass das Verfahren auf die Veränderung des wenigstens einen Netzzustandes unmittelbar mit einem veränderten eingespeisten Strom reagiert.

5. Verfahren nach einem der vorstehenden Ansprüche, **dadurch gekennzeichnet, dass**
- ein Nachführbetrieb vorliegt, wenn das Referenzsystem der Netzspannung nachgeführt wird und in wenigstens einer Größe wenigstens um eine vorbestimmte Mindestabweichung von der Netzspannung abweicht und
- andernfalls ein Normalbetrieb vorliegt, wobei
ein für den Normalbetrieb vorgegebener Grenzwert, in dem Nachführbetrieb um einen vorbestimmten Toleranzwert überschritten werden darf.

6. Verfahren nach Anspruch 5, **dadurch gekennzeichnet, dass** wenigstens eine Überschreitung zugelassen wird gemäß der Liste bestehend aus den Möglichkeiten, dass
- der vorgegebene Grenzwert ein maximaler Einspeisestrom ist und die vorbestimmte Mindestabweichung wenigstens 10% des maximalen Einspeisestroms beträgt,
- der vorgegebene Grenzwert eine maximal einzuspeisende Leistung ist und die vorbestimmte Mindestabweichung wenigstens 10% der maximal einzuspeisenden Leistung beträgt,
- der vorgegebene Grenzwert eine maximal zulässige Temperatur in einem die Ausgangsspannung generierenden Wechselrichter ist und die vorbestimmte Mindestabweichung wenigstens 10K beträgt,
- und der vorgegebene Grenzwert ein maximal zulässiger Wert eines Integrals der Temperatur über die vorbestimmte Zeit ist, und die vorbestimmte Mindestabweichung wenigstens 10K^{∗}s beträgt,
- der vorgegebene Grenzwert eine maximale Frequenzänderung ist und die vorbestimmte Mindestabweichung wenigstens 0,5Hz/s beträgt.

7. Verfahren nach einem der vorstehenden Ansprüche, **dadurch gekennzeichnet, dass**
- für das elektrische Versorgungsnetz eine nominale Frequenz vorgesehen ist,
- die Referenzfrequenz abhängig davon der Netzfrequenz nachgeführt wird, ob sich die Netzfrequenz der nominalen Frequenz nähert, oder sich entfernt, wobei
- das Nachführen der Referenzfrequenz stärker verzögert wird, wenn sich die Netzfrequenz von der nominalen Frequenz entfernt, als wenn sie sich ihr nähert.

8. Verfahren nach einem der vorstehenden Ansprüche, **dadurch gekennzeichnet, dass** die Referenzfrequenz auf einen Wert zwischen der Netzfrequenz und der bzw. einer nominalen Frequenz des elektrischen Versorgungsnetzes gesetzt wird, so dass Abweichungen zwischen dem Referenzsystem und der Netzspannung entstehen und Ausgleichsreaktionen, insbesondere um einen veränderten Einspeisestrom bewirken.

9. Verfahren zum Steuern mehrerer an einem elektrischen Versorgungsnetz an mehreren Netzanschlusspunkten angeschlossener Windenergieanlagen (100) jeweils zum Einspeisen elektrischer Leistung an einem der Netzanschlusspunkte (118), wobei ein Verfahren nach einem der vorstehenden Ansprüche verwendet wird.

10. Verfahren nach Anspruch 9, umfassend die Schritte:
- Bestimmen für jeden der mehreren Netzanschlusspunkte eine Ortseigenschaft, als ein Maß für eine funktionale Position des Netzanschlusspunktes in Bezug auf eine Kopplungsstärke des jeweiligen Netzanschlusspunktes für das elektrische Versorgungsnetz, so dass die Ortseigenschaft angibt, wie stark oder schwach der Netzanschlusspunkt mit dem elektrischen Versorgungsnetz gekoppelt ist,
- Vorgeben wenigstens einer Betriebseinstellung jeweils wenigstens einer der Windenergieanlagen in Abhängigkeit der Ortseigenschaft des Netzanschlusspunktes, über den die wenigstens eine Windenergieanlage einspeist.

11. Verfahren nach Anspruch 10, **dadurch gekennzeichnet, dass** das Vorgeben der Betriebseinstellung wenigstens eines aus der Liste umfasst, bestehend aus
- Vorgeben einer Drehzahlkennlinie (K1, K2, K3) in Abhängigkeit der Ortseigenschaft, insbesondere so, dass die Drehzahl um so höher ist, je stärker der Netzanschlusspunkt mit dem Versorgungsnetz gekoppelt ist,
- Vorgeben eines zulässigen Drehzahlbandes, in dem die Drehzahl variiert werden darf, um dadurch Rotationsenergie bereitzustellen oder abzugeben, insbesondere so, dass das Drehzahlband um so breiter ist, je stärker der Netzanschlusspunkt mit dem Versorgungsnetz gekoppelt ist,
- Wählen der Verzögerungsdynamik des verzögerten Nachführens in Abhängigkeit der Ortseigenschaft, insbesondere so, dass um so stärker verzögert wird, je stärker der Netzanschlusspunkt mit dem Versorgungsnetz gekoppelt ist,
- Bereitstellen gespeicherter Energie in Abhängigkeit der Ortseigenschaft, insbesondere so, dass die gespeicherte Energie um so größer ist, je stärker der Netzanschlusspunkt mit dem Versorgungsnetz gekoppelt ist und
- Bereitstellen eines Energiespeichers in Abhängigkeit der Ortseigenschaft, insbesondere so, dass der Energiespeicher um so größer ist, je stärker der Netzanschlusspunkt mit dem Versorgungsnetz gekoppelt ist.

12. Verfahren nach einem der Ansprüche 9 bis 11, **dadurch gekennzeichnet, dass** Windenergieanlagen, die über unterschiedliche Netzanschlusspunkte in das elektrische Versorgungsnetz einspeisen, über eine Datenverbindung verbunden sind, eingerichtet für wenigstens eine Aufgabe aus der Liste bestehend aus
- Übertragen von Steuerdaten zum Koordinieren der Einspeisung an den unterschiedlichen Netzanschlusspunkten,
- Koordinieren der Auswahl der Nachführdynamiken der Windenergieanlagen der unterschiedlichen Netzanschlusspunkte und
- Vorgeben unterschiedlicher Nachführdynamiken für die Windenergieanlagen unterschiedlicher Netzanschlusspunkte.

13. Windenergieanlage (100) zum Einspeisen elektrischer Leistung an einem Netzanschlusspunkt (118) in ein eine Netzspannung mit einer Netzfrequenz (f_{N}) aufweisendes elektrisches Versorgungsnetz (50, 120) umfassend
- einen Rotor (106) mit mehreren Rotorblättern (108) und einem Generator zum Erzeugen elektrischer Leistung aus Wind,
- ein Referenzvorgabemittel zum Vorgeben eines Referenzsystems mit einer Referenzfrequenz (fref), einem Referenzzeiger (Z_{ref}) mit einem Referenzwinkel und einer Referenzamplitude einer zu erzeugenden Ausgangsspannung (U_{ref}), wobei der Referenzwinkel mit der Referenzfrequenz (f_{ref}) umläuft und die Referenzfrequenz im Wesentlichen der Netzfrequenz (f_{N}) entspricht,
- ein Phasenwinkelvorgabemittel zum Vorgeben eines Phasenwinkels (ϕ) als Phasenwinkel zwischen der Ausgangsspannung (U_{ref}) und der Netzspannung (U_{N}),
- ein Berechnungsmittel zum Berechnen eines mit dem Referenzwinkel umlaufenden Einspeisewinkels aus dem vorgegebenen Phasenwinkel, so dass sich zwischen einer mit dem Einspeisewinkel erzeugten Ausgangsspannung und der Netzspannung der vorgegebene Phasenwinkel (ϕ) einstellt, wenn die Referenzfrequenz (f_{ref}) mit der Netzfrequenz (f_{N}) übereinstimmt,
- eine Einspeiseeinheit mit wenigstens einem Frequenzwechselrichter zum Erzeugen der Ausgangsspannung (U_{ref}) mit einer Spannungsamplitude in Abhängigkeit der Referenzamplitude, einer Frequenz in Abhängigkeit der Referenzfrequenz und dem Einspeisewinkel zum Einspeisen der erzeugten Leistung in das elektrische Versorgungsnetz und
- ein Nachführmittel zum verzögerten Nachführen des Referenzsystems dem Verhalten der Netzspannung, **dadurch gekennzeichnet, dass**
die Windenergieanlage dazu eingerichtet ist, ein Verfahren nach einem der Ansprüche 1 bis 8 durchzuführen.

14. Windenergieanlage nach Anspruch 13, **dadurch gekennzeichnet, dass**
die Windenergieanlage wenigstens einen Energiespeicher, besonders Batteriespeicher, aufweist, damit die für das verzögerte Nachführen benötigte Zusatzleistung oder daraus entstehende Überschussleistung aus dem Energiespeicher genommen werden kann bzw. in einen solchen eingespeichert werden kann.

15. Windenergieanlage nach Anspruch 13 oder 14, **dadurch gekennzeichnet, dass**
- eine Datenübertragungseinrichtung vorgesehen ist zum Austauschen von Daten über eine Datenverbindung mit wenigstens einer weiteren Windenergieanlage, die über einen weiteren Netzanschlusspunkt in das elektrische Versorgungsnetz einspeist, und
- wenigstens ein Koordinierungsmittel vorgesehen ist, zum Koordinieren der Einspeisung der elektrischen Leistung mit dem Einspeisen der elektrischen Leistung der wenigstens einen weiteren Windenergieanlage.

16. Windenergieanlage nach Anspruch 15, **dadurch gekennzeichnet, dass** sie dazu vorbereitet ist, ein Verfahren nach einem der Ansprüche 9 bis 12 durchzuführen, und/oder, dass
- ein Bestimmungsmittel oder ein Eingabemittel vorgesehen ist, zum Bestimmen bzw. Eingeben einer Ortseigenschaft für jeden der mehreren Netzanschlusspunkte, als ein Maß für eine funktionale Position des Netzanschlusspunktes in Bezug auf ein Zentrum und eine Peripherie des elektrischen Versorgungsnetzes, so dass die Ortseigenschaft angibt, wie zentral oder dezentral der Netzanschlusspunkt im elektrischen Versorgungsnetz angeordnet ist, und
- ein Vorgabemittel zum Vorgeben wenigstens einer Betriebseinstellung jeweils wenigstens einer der Windenergieanlagen in Abhängigkeit der Ortseigenschaft des Netzanschlusspunktes, über den die wenigstens eine Windenergieanlage einspeist.

17. Windpark, mit mehreren über einen gemeinsamen Netzanschlusspunkte in ein elektrisches Versorgungsnetz einspeisenden Windenergieanlagen, wobei der Windpark wenigstens eine Windenergieanlage nach einem der Ansprüche 13 bis 16 aufweist.

18. Anordnung mehrerer Windenergieanlagen oder mehrerer Windparks zum Einspeisen elektrischer Leistung an mehreren Netzanschlusspunkten in ein elektrisches Versorgungsnetz, umfassend wenigstens eine Datenübertragungseinrichtung zum Austauschen von Daten über eine Datenverbindung zwischen den Windenergieanlage bzw. Windparks, die an den mehreren Netzanschlusspunkten in das elektrische Versorgungsnetz einspeisen, wobei Windenergieanlagen gemäß einem der Ansprüche 13 bis 16 und/oder Windparks gemäß Anspruch 17 verwendet werden.

19. Anordnung nach Anspruch 18, **dadurch gekennzeichnet, dass**
- für jeden der mehreren Netzanschlusspunkte eine Ortseigenschaft bestimmt wird oder vorgegeben ist, als ein Maß für eine funktionale Position des Netzanschlusspunktes in Bezug auf ein Zentrum und eine Peripherie des elektrischen Versorgungsnetzes, so dass die Ortseigenschaft angibt, wie zentral oder dezentral der Netzanschlusspunkt im elektrischen Versorgungsnetz angeordnet ist und
- mehrere Energiespeicher an mehreren der Netzanschlusspunkte in Abhängigkeit der Ortseigenschaft so vorgesehen sind, dass der Energiespeicher jeweils eines Netzanschlusspunktes umso größer ist, je zentraler der Netzanschlusspunkt im Versorgungsnetz angeordnet ist.

## Claims

1. A method for feeding electrical power into an electrical supply grid (50, 120) having a grid voltage having a grid frequency (f_{N}) at a grid connection point (118) by means of at least one wind power installation (100) or a power plant consisting of at least one wind power installation, comprising the following steps:
- specifying a reference system having a reference frequency (fref), a reference phasor (Z_{ref}) having a reference angle, and a reference amplitude of an output voltage (U_{ref}) to be generated, wherein the reference angle revolves at the reference frequency and the reference frequency (f_{ref}) substantially corresponds to the grid frequency (f_{N}),
- specifying a phase angle (ϕ) as the phase angle between the output voltage (U_{ref}) and the grid voltage (U_{N}),
- calculating an infeed angle, which revolves with the reference angle, from the specified phase angle, such that the specified phase angle (ϕ) results as a phase angle between an output voltage generated at the infeed angle and the grid voltage when the reference frequency (f_{ref}) corresponds to the grid frequency (f_{N}),
- generating the output voltage (U_{ref}) having a voltage amplitude depending on the reference amplitude, a frequency depending on the reference frequency and the infeed angle and
- delayed tracking of the behavior of the grid voltage by the reference system, **characterized in that** for the delayed tracking:
- an actual phase angle between the generated output voltage (U_{ref}) and the grid voltage (U_{N}) is detected,
- a difference angle between the specified phase angle and the detected phase angle is formed,
- the reference angle is changed in such a way that the difference angle is reduced according to the magnitude using a predetermined delay function and
- the reference frequency is adjusted to the reference angle changed in this way.

2. The method as claimed in claim 1, **characterized in that** the delayed tracking is effected using predetermined delay dynamics (PT1, PT2), and/or
that for the purpose of the delayed tracking by the reference system,
- the reference frequency is made to track the grid frequency in a delayed manner and/or
- the reference amplitude is made to track the grid voltage in a delayed manner.

3. The method as claimed in claim 1 or 2, **characterized in that** the delayed tracking and the or a predetermined delay dynamics (PT1, PT2), respectively, can be set and/or depend on the grid connection point (118) and/or **in that** additional power or resulting excess power from rotation energy required for the delayed tracking is offset or stored as rotation energy, and/or is taken from an energy store, particularly a battery store, or is stored in such an energy store, particularly a battery store, and/or that the delay dynamics are realized by means of the delay function and the delay function is a pt1 function or a pt2 function having a non-overshooting step response.

4. The method as claimed in one of the preceding claims, **characterized in that** the reference frequency is set to the grid frequency in a start setting (16) and/or that
- the generation of the output voltage (U_{ref}) produces a current fed into the supply grid (50, 120) and **in that**
- the delay function or delay dynamics is/are selected in such a way that, when at least one state in the supply grid changes, the generation of the output voltage initially remains substantially unchanged so that a resulting change of the infed current initially is not substantially counteracted so that the method reacts to the change in the at least one grid state immediately with a changed infed current.

5. The method as claimed in one of the preceding claims, **characterized in that**
- a tracking operation is present when the reference system is made to track the grid voltage and deviates from the grid voltage in at least one variable at least by a predetermined minimum deviation and
- a normal operation is otherwise present, wherein
a limit value specified for the normal operation may be exceeded by a predetermined tolerance value in the tracking operation.

6. The method as claimed in claim 5, **characterized in that** at least one overshoot is permitted in accordance with the list consisting of the possibilities that
- the specified limit value is a maximum infeed current and the predetermined minimum deviation is at least 10% of the maximum infeed current,
- the specified limit value is a maximum power to be fed in and the predetermined minimum deviation is at least 10% of the maximum power to be fed in,
- the specified limit value is a maximum permissible temperature in an inverter that generates the output voltage and the predetermined minimum deviation is at least 10 K,
- and the specified limit value is a maximum permissible value of an integral of the temperature over the predetermined time and the predetermined minimum deviation is at least 10 K^{∗}s,
- the specified limit value is a maximum change in frequency and the predetermined minimum deviation is at least 0.5 Hz/s.

7. The method as claimed in one of the preceding claims, **characterized in that**
- a nominal frequency is provided for the electrical supply grid,
- the reference frequency is made to track the grid frequency independently of whether the grid frequency approaches or diverges from the nominal frequency, wherein
- the tracking by the reference frequency is delayed to a greater extent when the grid frequency diverges from the nominal frequency than when said grid frequency approaches said nominal frequency.

8. The method as claimed in one of the preceding claims, **characterized in that** the reference frequency is set to a value between the grid frequency and the or a nominal frequency of the electrical supply grid, with the result that deviations between the reference system and the grid voltage arise and cause compensation reactions, in particular a changed infeed current.

9. A method for controlling a plurality of wind power installations (100) connected to an electrical supply grid at a plurality of grid connection points in each case for feeding in electrical power at one of the grid connection points (118), wherein a method as claimed in one of the preceding claims is used.

10. The method as claimed in claim 9, comprising the following steps:
- determining, for each of the plurality of grid connection points, a location property as a measure for a functional position of the grid connection point in relation to a coupling strength of the respective grid connection point for the electrical supply grid, with the result that the location property indicates how strongly or weakly the grid connection point is coupled to the electrical supply grid,
- specifying at least one operating setting in each case of at least one of the wind power installations depending on the location property of the grid connection point via which the at least one wind power installation feeds in.

11. The method as claimed in claim 10, **characterized in that** the specification of the operating setting consists of at least one from the list consisting of
- specifying a rotational speed characteristic curve (K1, K2, K3) depending on the location property, in particular so that the rotational speed is higher, the more strongly the grid connection point is coupled to the supply grid,
- specifying a permissible rotational speed band in which the rotational speed may be varied in order thereby to provide or deliver rotation energy, in particular so that the rotational speed band is wider, the more strongly the grid connection point is coupled to the supply grid,
- selecting the delay dynamics of the delayed tracking depending on the location property, in particular so that the delay is greater, the more strongly the grid connection point is coupled to the supply grid,
- providing stored energy depending on the location property, in particular so that the stored energy is greater, the more strongly the grid connection point is coupled to the supply grid and
- providing an energy store depending on the location property, in particular so that the energy store is greater, the more strongly the grid connection point is coupled to the supply grid.

12. The method as claimed in one of claims 9 to 11, **characterized in that** wind power installations that feed into the electrical supply grid via different grid connection points are connected via a data connection, configured for at least one task from the list consisting of
- transmitting control data for coordinating the infeed at the different grid connection points,
- coordinating the selection of the tracking dynamics of the wind power installations of the different grid connection points and
- specifying different tracking dynamics for the wind power installations of different grid connection points.

13. A wind power installation (100) for feeding electrical power into an electrical supply grid (50, 120) having a grid voltage having a grid frequency (f_{N}) at a grid connection point (118), comprising
- a rotor (106) having a plurality of rotor blades (108) and a generator for generating electrical power from wind,
- a reference specification means for specifying a reference system having a reference frequency (fref), a reference phasor (Z_{ref}) having a reference angle, and a reference amplitude of an output voltage (U_{ref}) to be generated, wherein the reference angle revolves at the reference frequency (f_{ref}) and the reference frequency substantially corresponds to the grid frequency (f_{N}),
- a phase angle specification means for specifying a phase angle (ϕ) as the phase angle between the output voltage (U_{ref}) and the grid voltage (U_{N}),
- a calculation means for calculating an infeed angle, which revolves with the reference angle, from the specified phase angle, such that the specified phase angle (ϕ) results as a phase angle between an output voltage generated at the infeed angle and the grid voltage when the reference frequency (f_{ref}) corresponds to the grid frequency (f_{N}),
- an infeed unit having at least one frequency inverter for generating the output voltage (U_{ref}) having a voltage amplitude depending on the reference amplitude, a frequency depending on the reference frequency and the infeed angle for feeding the generated power into the electrical supply grid and
- a tracking means for the delayed tracking of the behavior of the grid voltage by the reference system, **characterized in that**
the wind power installation is adapted to carry out one method as claimed in one of claims 1 to 8.

14. The wind power installation as claimed in claim 13, **characterized in that**
the wind power installation has at least one energy store, particularly a battery store, in order that the additional power or resulting excess power required for the delayed tracking can be taken from the energy store or can be stored in such an energy store.

15. The wind power installation as claimed in claim 13 or 14, **characterized in that**
- a data transmission device is provided for exchanging data via a data connection with at least one further wind power installation that feeds into the electrical supply grid via a further grid connection point, and
- at least one coordination means is provided for coordinating the infeed of the electrical power with the infeed of the electrical power of the at least one further wind power installation.

16. The wind power installation as claimed in claim 15, **characterized in that** said wind power installation is prepared to carry out a method as claimed in one of claims 9 to 12, and/or that
- a determination means or an input means is provided for determining or inputting a location property for each of the plurality of grid connection points as a measure for a functional position of the grid connection point in relation to a center and a periphery of the electrical supply grid, with the result that the location property indicates how centrally or decentrally the grid connection point is arranged in the electrical supply grid, and
- a specification means for specifying at least one operating setting in each case of at least one of the wind power installations depending on the location property of the grid connection point via which the at least one wind power installation feeds in.

17. A wind farm, having a plurality of wind power installations feeding into an electrical supply grid via a common grid connection point, wherein the wind farm has at least one wind power installation as claimed in one of claims 13 to 16.

18. An arrangement of a plurality of wind power installations or a plurality of wind farms for feeding electrical power into an electrical supply grid at a plurality of grid connection points, comprising at least one data transmission device for exchanging data via a data connection between the wind power installations or wind farms that feed into the electrical supply grid at the plurality of grid connection points, wherein wind power installations as claimed in one of claims 13 to 16 and/or wind farms as claimed in claim 17 are used.

19. The arrangement as claimed in claim 18, **characterized in that**
- a location property is determined or specified for each of the plurality of grid connection points as a measure for a functional position of the grid connection point in relation to a center and a periphery of the electrical supply grid, with the result that the location property indicates how centrally or decentrally the grid connection point is arranged in the electrical supply grid, and
- a plurality of energy stores are provided at a plurality of the grid connection points depending on the location property in such a way that the energy store of a respective grid connection point is greater, the more centrally the grid connection point is arranged in the supply grid.

## Revendications

1. Procédé pour injecter une puissance électrique au niveau d'un point de raccordement au réseau (118) dans un réseau d'alimentation (50, 120) électrique présentant une tension de réseau avec une fréquence de réseau (fN) au moyen d'au moins une éolienne (100) ou d'une centrale électrique constituée d'au moins une éolienne, comprenant les étapes :
- de spécification d'un système de référence avec une fréquence de référence (f_{ref}), un pointeur de référence (Z_{ref}) avec un angle de référence et une amplitude de référence d'une tension de sortie (U_{ref}) à générer, dans lequel l'angle de référence tourne à la fréquence de référence et la fréquence de référence (f_{ref}) correspond sensiblement à la fréquence de réseau (f_{N}),
- de spécification d'un angle de phase (ϕ) en tant qu'angle de phase entre la tension de sortie (U_{ref}) et la tension de réseau (U_{N}),
- de calcul d'un angle d'injection tournant avec l'angle de référence à partir de l'angle de phase spécifié de sorte que l'angle de phase (cp) spécifié est réglé entre une tension de sortie générée avec l'angle d'injection et la tension de réseau quand la fréquence de référence (f_{ref}) coïncide avec la fréquence de réseau (f_{N}),
- de génération de la tension de sortie (U_{ref}) avec une amplitude de tension en fonction de l'amplitude de référence, une fréquence en fonction de la fréquence de référence et l'angle d'injection, et
- d'asservissement temporisé du système de référence au comportement de la tension de réseau,
**caractérisé en ce qu'**aux fins de l'asservissement temporisé :
- un angle de phase réel entre la tension de sortie (U_{ref}) générée et la tension de réseau (U_{N}) est détecté,
- un angle de différence est formé entre l'angle de phase spécifié et l'angle de phase détecté,
- l'angle de référence est modifié de telle sorte que l'angle de différence est réduit, en termes de valeur, avec une fonction de temporisation prédéfinie, et
- la fréquence de référence est adaptée à l'angle de référence ainsi modifié.

2. Procédé selon la revendication 1, **caractérisé en ce que** l'asservissement temporisé est effectué avec une dynamique de temporisation prédéfinie (PT1, PT2), et/ou qu'aux fins de l'asservissement temporisé du système de référence
- la fréquence de référence de la fréquence de réseau est asservie de manière temporisée, et/ou
- l'amplitude de référence de la tension de réseau est asservie de manière temporisée.

3. Procédé selon la revendication 1 ou 2, **caractérisé en ce que** l'asservissement temporisé ou la ou une dynamique de temporisation prédéfinie (PT1, PT2) peut être réglé(e) et/ou dépend du point de raccordement au réseau (118), et/ou qu'une puissance supplémentaire nécessaire à l'asservissement temporisé ou une puissance excessive en résultant est assurée par une énergie de rotation ou est stockée en tant qu'énergie de rotation, et/ou est prise d'un accumulateur d'énergie, en particulier d'un accumulateur de batterie ou est stockée dans un accumulateur de ce type, et/ou que la dynamique de temporisation est réalisée au moyen de la fonction de temporisation et la fonction de temporisation est une fonction pt1 ou une fonction pt2 avec une réponse transitoire sans suroscillation.

4. Procédé selon l'une quelconque des revendications précédentes, **caractérisé en ce que** la fréquence de référence est mise sur la fréquence de réseau dans un réglage de démarrage (16), et/ou que
- un courant injecté dans le réseau d'alimentation (50, 120) découle de la génération de la tension de sortie (U_{ref}) et que
- la fonction de temporisation ou la dynamique de temporisation est choisie de telle sorte que, lors d'une modification d'au moins un état dans le réseau d'alimentation, la génération de la tension de sortie reste sensiblement d'abord inchangée de sorte qu'une modification en résultant du courant injecté n'est d'abord pas sensiblement contrecarrée de sorte que le procédé réagit à la modification de l'au moins un état de réseau directement avec un courant injecté modifié.

5. Procédé selon l'une quelconque des revendications précédentes, **caractérisé en ce que**
- un mode de fonctionnement en asservissement est présent quand le système de référence de la tension de réseau est asservi et diverge, dans au moins une grandeur, au moins d'un écart minimal prédéfini de la tension de réseau, et
- sinon un mode de fonctionnement normal est présent, dans lequel
une valeur limite spécifiée pour le mode de fonctionnement normal peut être dépassée dans le mode de fonctionnement en asservissement d'une valeur de tolérance prédéfinie.

6. Procédé selon la revendication 5, **caractérisé en ce qu'**au moins un dépassement est admis selon la liste constituée des possibilités, aux termes de laquelle
- la valeur limite spécifiée est un courant d'injection maximal et l'écart minimal prédéfini est égal à au moins 10 % du courant d'injection maximal,
- la valeur limite spécifiée est une puissance à injecter au maximum et l'écart minimal prédéfini est égal à au moins 10 % de la puissance à injecter au maximum,
- la valeur limite spécifiée est une température admise au maximum dans un onduleur générant la tension et l'écart minimal prédéfini est égal à au moins 10 K,
- et la valeur limite prédéfinie est une valeur admise au maximum d'une intégrale de la température sur la durée prédéfinie, et l'écart minimal prédéfini est égal à au moins 10 K^{∗}s,
- la valeur limite prédéfinie est un changement de fréquence maximal et l'écart minimal prédéfini est égal à au moins 0,5 Hz/s.

7. Procédé selon l'une quelconque des revendications précédentes, **caractérisé en ce que**
- une fréquence nominale est prévue pour le réseau d'alimentation électrique,
- la fréquence de référence de la fréquence de réseau est asservie selon que la fréquence de réseau se rapproche de la fréquence nominale ou qu'elle s'en éloigne, dans lequel
- l'asservissement de la fréquence de référence est plus fortement temporisé quand la fréquence de réseau s'éloigne de la fréquence nominale que quand elle s'en approche.

8. Procédé selon l'une quelconque des revendications précédentes, **caractérisé en ce que** la fréquence de référence est réglée sur une valeur entre la fréquence de réseau et la ou une fréquence minimale du réseau d'alimentation électrique de sorte que des écarts entre le système de référence et la tension de réseau apparaissent et entraînent des réactions de compensation en particulier d'un courant d'injection modifié.

9. Procédé de commande de plusieurs éoliennes (100) raccordées à un réseau d'alimentation électrique au niveau de plusieurs points de raccordement au réseau respectivement, respectivement pour injecter une puissance électrique au niveau d'un des points de raccordement au réseau (118), dans lequel un procédé selon l'une quelconque des revendications précédentes est utilisé.

10. Procédé selon la revendication 9, comprenant les étapes :
- de définition pour chacun des plusieurs points de raccordement au réseau d'une caractéristique du lieu en tant qu'une mesure pour une position fonctionnelle du point de raccordement au réseau par rapport à une intensité de couplage du point de raccordement au réseau respectif pour le réseau d'alimentation électrique de sorte que la caractéristique du lieu indique l'intensité ou la faiblesse avec laquelle le point de raccordement au réseau est couplé au réseau d'alimentation électrique,
- de spécification d'au moins un réglage de fonctionnement respectivement d'au moins une des éoliennes en fonction de la caractéristique du lieu du point de raccordement au réseau, par l'intermédiaire duquel au moins une éolienne injecte une puissance.

11. Procédé selon la revendication 10, **caractérisé en ce que** la spécification du réglage de fonctionnement comprend au moins un élément parmi la liste constituée de
- la spécification d'une ligne caractéristique de vitesse de rotation (K1, K2, K3) en fonction de la caractéristique du lieu en particulier de telle sorte que plus la vitesse de rotation est élevée, plus l'intensité avec laquelle le point de raccordement au réseau est couplé au réseau d'alimentation est élevée,
- la spécification d'une plage de vitesses de rotation admise, dans laquelle la vitesse de rotation peut varier pour fournir ou distribuer ce faisant une énergie de rotation, en particulier de telle sorte que plus la plage de vitesses de rotation est large, plus l'intensité avec laquelle le point de raccordement au réseau est couplé au réseau d'alimentation est élevée,
- le choix de la dynamique de temporisation de l'asservissement temporisé en fonction de la caractéristique du lieu, en particulier de telle sorte que plus l'intensité avec laquelle la temporisation est effectuée est élevée, plus l'intensité avec laquelle le point de raccordement au réseau est couplé au réseau d'alimentation est élevée,
- la fourniture d'une énergie stockée en fonction de la caractéristique du lieu, en particulier de telle sorte que plus l'énergie stockée est importante, plus l'intensité avec laquelle le point de raccordement au réseau est couplé au réseau d'alimentation est élevée, et
- la fourniture d'un accumulateur d'énergie en fonction de la caractéristique du lieu, en particulier de telle sorte que plus l'accumulateur d'énergie est important, plus l'intensité avec laquelle le point de raccordement au réseau est couplé au réseau d'alimentation est élevée.

12. Procédé selon l'une quelconque des revendications 9 à 11, **caractérisé en ce que** des éoliennes, qui injectent une puissance dans le réseau d'alimentation électrique par l'intermédiaire de différents points de raccordement au réseau, sont reliées par l'intermédiaire d'une liaison de données mise au point pour au moins une tâche parmi la liste constituée de
- la transmission de données de commande pour coordonner l'injection de puissance au niveau des différents points de raccordement au réseau,
- la coordination du choix des dynamiques d'asservissement des éoliennes des différents points de raccordement au réseau, et
- la spécification de différentes dynamiques d'asservissement pour les éoliennes de différents points de raccordement au réseau.

13. Éolienne (100) pour injecter une puissance électrique au niveau d'un point de raccordement au réseau (118) dans un réseau d'alimentation (50, 120) électrique présentant une tension de réseau avec une fréquence de réseau (f_{N}), comprenant
- un rotor (106) avec plusieurs pales de rotor (108) et un générateur pour générer une puissance électrique à partir du vent,
- un moyen de spécification de référence pour spécifier un système de référence avec une fréquence de référence (f_{ref}), un pointeur de référence (Z_{ref}) avec un angle de référence et une amplitude de référence d'une tension de sortie (U_{ref}) à générer, dans laquelle l'angle de référence tourne à la fréquence de référence (f_{ref}) et la fréquence de référence correspond sensiblement à la fréquence de réseau (f_{N}),
- un moyen de spécification d'angle de phase pour spécifier un angle de phase (cp) en tant qu'angle de phase entre la tension de sortie (U_{ref}) et la tension de réseau (U_{N}),
- un moyen de calcul pour calculer un angle d'injection tournant avec l'angle de référence à partir de l'angle de phase spécifié de sorte que l'angle de phase (ϕ) spécifié se règle entre une tension de sortie générée avec l'angle d'injection et la tension de réseau quand la fréquence de référence (f_{ref}) coïncide avec la fréquence de réseau (f_{N}),
- une unité d'injection avec au moins un onduleur de fréquence pour générer la tension de sortie (U_{ref}) avec une amplitude de tension en fonction de l'amplitude de référence, une fréquence en fonction de la fréquence de référence et l'angle d'injection pour injecter la puissance générée dans le réseau d'alimentation électrique, et
- un moyen d'asservissement pour asservir de manière temporisée le système de référence au comportement de la tension de réseau, **caractérisée en ce que**
l'éolienne est mise au point pour mettre en œuvre un procédé selon l'une quelconque des revendications 1 à 8.

14. Éolienne selon la revendication 13, **caractérisée en ce que**
l'éolienne présente au moins un accumulateur d'énergie, en particulier un accumulateur de batterie afin que la puissance supplémentaire nécessaire à l'asservissement temporisé ou la puissance excessive en résultant puisse être prise de l'accumulateur d'énergie ou puisse être stockée dans un accumulateur de ce type.

15. Éolienne selon la revendication 13 ou 14, **caractérisée en ce que**
- un dispositif de transmission de données est prévu pour échanger des données par l'intermédiaire d'une liaison de données avec au moins une autre éolienne, qui injecte une puissance par l'intermédiaire d'un autre point de raccordement au réseau dans le réseau d'alimentation électrique, et
- au moins un moyen de coordination est prévu pour coordonner l'injection de la puissance électrique avec l'injection de la puissance électrique de l'au moins une autre éolienne.

16. Éolienne selon la revendication 15, **caractérisée en ce qu'**elle est préparée pour mettre en œuvre un procédé selon l'une quelconque des revendications 9 à 12, et/ou
**que**
- un moyen de définition ou un moyen d'entrée est prévu pour définir ou entrer une caractéristique du lieu pour chacun des plusieurs points de raccordement au réseau en tant qu'une mesure pour une position fonctionnelle du point de raccordement au réseau par rapport à un centre et une périphérie du réseau d'alimentation électrique de sorte que la caractéristique du lieu indique la position centrale ou décentralisée, selon laquelle le point de raccordement au réseau est disposé dans le réseau d'alimentation électrique, et
- un moyen de spécification pour spécifier au moins un réglage de fonctionnement respectivement d'au moins une des éoliennes en fonction de la caractéristique du lieu du point de raccordement au réseau, par l'intermédiaire duquel l'au moins une éolienne injecte une puissance.

17. Parc éolien avec plusieurs éoliennes injectant dans un réseau d'alimentation électrique par l'intermédiaire d'un point de raccordement au réseau commun, dans lequel le parc éolien présente au moins une éolienne selon l'une quelconque des revendications 13 à 16.

18. Ensemble de plusieurs éoliennes ou de plusieurs parcs éoliens pour injecter une puissance électrique au niveau de plusieurs points de raccordement au réseau dans un réseau d'alimentation électrique, comprenant au moins un dispositif de transmission de données pour échanger des données par l'intermédiaire d'une liaison de données entre l'éolienne ou les parcs éoliens, qui injectent une puissance dans le réseau d'alimentation électrique au niveau des plusieurs points de raccordement au réseau, dans lequel des éoliennes selon l'une quelconque des revendications 13 à 16 et/ou des parcs éoliens selon la revendication 17 sont utilisés.

19. Ensemble selon la revendication 18, **caractérisé en ce que**
- pour chacun des plusieurs points de raccordement au réseau, une caractéristique du lieu est définie ou est spécifiée en tant qu'une mesure pour une position fonctionnelle du point de raccordement au réseau par rapport à un centre et une périphérie du réseau d'alimentation électrique de sorte que la caractéristique du lieu indique la position centrale ou décentralisée, selon laquelle le point de raccordement au réseau est disposé dans le réseau d'alimentation électrique, et
- plusieurs accumulateurs d'énergie sont prévus au niveau de plusieurs des points de raccordement au réseau en fonction de la caractéristique du lieu de telle sorte que plus l'accumulateur d'énergie de respectivement un point de raccordement au réseau est important, plus la disposition du point de raccordement au réseau dans le réseau d'alimentation est centrale.
